(19) Europäisches Patentamt
European Patent Office
Office européen des brevets

(11) **EP 4 428 942 A2**

(12) **EUROPEAN PATENT APPLICATION**

(43) Date of publication:
**11.09.2024 Bulletin 2024/37**

(21) Application number: **24161035.1**

(22) Date of filing: **02.03.2024**

(51) International Patent Classification (IPC):
**H01M 4/131** $^{(2010.01)}$ **H01M 4/48** $^{(2010.01)}$
**H01M 4/62** $^{(2006.01)}$ **H01M 10/052** $^{(2010.01)}$

(52) Cooperative Patent Classification (CPC):
**H01M 4/131; H01M 4/483; H01M 4/62; H01M 10/052**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.03.2023 JP 2023037823**

(71) Applicant: **Ricoh Company, Ltd.**
**Tokyo 143-8555 (JP)**

(72) Inventors:
• **SAIGA, Takuya**
**Tokyo, 143-8555 (JP)**
• **TAKAUJI, Keigo**
**Tokyo, 143-8555 (JP)**
• **HAGIWARA, Hiroki**
**Tokyo, 143-8555 (JP)**
• **NOSE, Daisuke**
**Tokyo, 143-8555 (JP)**
• **ABE, Naoto**
**Tokyo, 143-8555 (JP)**

(74) Representative: **Marks & Clerk LLP**
**15 Fetter Lane**
**London EC4A 1BW (GB)**

(54) **ELECTRODE, ELECTROCHEMICAL ELEMENT, DEVICE, MOVING OBJECT, ELECTRODE PRODUCTION APPARATUS, AND ELECTRODE PRODUCTION METHOD**

(57) An electrode (10, 20) is provided that includes an electrode base (11, 21), an electrode mixture layer (12, 22) on the electrode base (11, 21) and containing an active material, and a porous insulating layer (13, 23) on the electrode mixture layer (12, 22) and formed integrally with the electrode mixture layer (12, 22). The porous insulating layer (13, 23) has a porous structure having a resin backbone and contains an inorganic oxide. An area ratio (a:b) of the resin backbone (a) and the inorganic oxide (b) in the porous insulating layer (13, 23) ranges from 99.9%:0.1% to 90%:10%.

FIG. 12

EP 4 428 942 A2

**Description**

BACKGROUND

Technical Field

The present disclosure relates to an electrode, an electrochemical element, a device, a moving object, an electrode production apparatus, and an electrode production method.

Related Art

Electrochemical elements, for example, secondary batteries such as lithium ion secondary batteries, are increasingly demanded to have higher output, higher capacity, and longer life. However, as the energy density of batteries increases, there are various problems related to safety, such as thermal runaway. For example, in order to suppress such a thermal runaway reaction, there should be insulation between the electrodes.

In order to secure insulation between electrodes, for example, a separator containing polyethylene or polypropylene as a main component is used as an inter-electrode insulating layer. Since such separators are deformed by repeated compressive loads, a technique has been proposed in which thermoset resin fibers are added to increase the compression-resistance property (see, for example, WO2018/186135).

However, since the separator of this proposal is not configured to be in close contact with the electrode, when the battery is deformed by an external impact or when a conductive foreign substance such as a nail penetrates the separator, the separator and the electrode may be displaced from each other to cause a short circuit.

As a means of solving the aforementioned problems, for example, a technique has been proposed in which an ion-permeable porous insulating layer formed by a heat-resistant cross-linked resin is provided in close contact with an outer surface of an electrode mixture layer to increase safety (see, for example, WO2014/106954). However, the porous insulating layer formed of the proposed resin alone has a problem in that when the porous insulating layer is compressed inside the battery, the voids are collapsed to reduce the ion permeability, thereby reducing the battery performance.

SUMMARY

An object of the present invention is to provide an electrode which can provide an electrochemical element having excellent compression resistant strength and capable of realizing a high capacity retention rate.

The electrode of the present disclosure as a means to solve the above-described problem includes an electrode base, an electrode mixture layer on the electrode base and containing an active material, and a porous insulating layer on the electrode mixture layer and formed integrally with the electrode mixture layer. The porous insulating layer has a porous structure having a resin backbone and contains an inorganic oxide, and an area ratio (a:b) of the resin backbone (a) and the inorganic oxide (b) in the porous insulating layer ranges from 99.9%:0.1% to 90%: 10%.

According to the present disclosure, an electrode is provided which can provide an electrochemical element having excellent compression resistant strength and capable of realizing a high capacity retention rate.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1A is a schematic plan view of a porous insulating layer;
FIG. 1B is a schematic cross-sectional view of a porous insulating layer;
FIG. 2 is a schematic cross-sectional view of a porous insulating layer with a distribution state of porosity;
FIG. 3 is a schematic diagram illustrating an electrode production method of according to the present disclosure;
FIG. 4 is a schematic diagram illustrating an electrode production apparatus according to the present disclosure;
FIG. 5 is a schematic diagram illustrating an electrode production apparatus according to the present disclosure;
FIG. 6 is a schematic diagram illustrating an electrode production method according to the present disclosure;
FIG. 7 is a schematic diagram illustrating a modification of a liquid discharge device;
FIG. 8 is a schematic diagram illustrating an electrode production method according to the present disclosure;
FIG. 9 is a schematic diagram illustrating a modification of a liquid discharge device;
FIG. 10 is a cross-sectional view of a negative electrode according to the present disclosure;
FIG. 11 is a cross-sectional view of a positive electrode according to the present disclosure;

FIG. 12 is a cross-sectional view of an electrode element used in an electrochemical element according to the present disclosure;

FIG. 13 is a cross-sectional view of an electrochemical element according to the present disclosure; and

FIG. 14 is a schematic diagram illustrating a moving object equipped with an all-solid-state battery, which is an electrochemical element according to the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

(Electrode)

The electrode of the present disclosure includes an electrode base, an electrode mixture layer on the electrode base and containing an active material, and a porous insulating layer on the electrode mixture layer and formed integrally with the electrode mixture layer, and further includes other layers as necessary.

<Electrode Base>

The electrode base includes a negative electrode base used for a negative electrode and a positive electrode base used for a positive electrode.

The negative electrode base and the positive electrode base are not particularly limited and may be appropriately selected according to the purpose, so long as the bases can be used as current collectors.

A shape of the electrode base is not particularly limited and may be appropriately selected according to the purpose. However, the electrode base preferably has a plate shape or a foil shape because not only an electrode can be formed by applying an active material to both a front surface and a rear surface of the electrode base but also the capacity of an electrochemical element can be increased by stacking a plurality of electrodes.

As a material forming the electrode base, a material having electrical conductivity and electrochemical durability is used.

Examples of the material forming the electrode base include, but are not limited to, iron, copper, aluminum, nickel, stainless steel, titanium, tantalum, gold, platinum. Each of these materials can be used alone or in combination with others. In addition, an etched foil in which fine holes are formed by etching a metal on the surface of an electrode base, a holed electrode base used for a lithium ion capacitor, or the like can be used. Moreover, a flat base made of glass or plastic may also be used on which a conductor film or a semiconductor thin film is formed or a thin conductive electrode film is deposited, in addition to the above-described electrode.

<Electrode Mixture Layer>

The electrode mixture layer contains an active material such as a positive electrode active material or a negative electrode active material, and preferably contains a conductive auxiliary agent and a binder, and further contains other components as necessary.

-Positive Electrode Active Material-

The positive electrode active material is not particularly limited as long as the positive electrode active material can be intercalated or deintercalated with an alkali metal ion. However, an alkali-metal-containing transition metal compound can be used as the positive electrode active material.

Examples of the alkali-metal-containing transition metal compound include, but are not limited to, a lithium-containing transition metal compound such as a composite oxide including one or more elements selected from the group consisting of cobalt, manganese, nickel, chromium, iron, and vanadium, and lithium.

Examples of the lithium-containing transition metal compound include, but are not limited to, lithium cobalt oxide, lithium nickel oxide, and lithium manganese oxide.

As the alkali-metal-containing transition metal compound, a polyanionic compound having a tetrahedron represented by $XO_4$ ("X" represents P, S, As, Mo, W, Si, etc.) in the crystal structure can also be use. Among the alkali-metal-containing transition metal compounds, a lithium-containing transition metal phosphate compound such as lithium iron phosphate or lithium vanadium phosphate is preferable in terms of cycle characteristics, and lithium vanadium phosphate is particularly preferable in terms of lithium diffusion coefficient and output characteristics.

Note that, in terms of electron conductivity, it is preferable that the surface of the polyanionic compound is coated with a conductive auxiliary agent such as a carbon material to form a composite.

-Negative Electrode Active Material-

The negative electrode active material is not particularly limited as long as the negative electrode active material can be intercalated or deintercalated with an alkali metal ion. However, a carbon material including graphite having a graphite-type crystal structure can be used as the negative electrode active material.

Examples of the carbon material include, but are not limited to, natural graphite, synthetic graphite, poorly-graphitizable carbon (hard carbon), and easily-graphitizable carbon (soft carbon).

Examples of the negative electrode active material other than the carbon material include, but are not limited to, lithium titanate and titanium oxide.

Further, in terms of energy density of the electrochemical element, it is preferable to use a high-capacity material such as, for example, silicon, tin, a silicon alloy, a tin alloy, silicon oxide, silicon nitride, or tin oxide as the negative electrode active material.

A mode diameter of the active material is preferably 0.5 $\mu$m or more and 10 $\mu$m or less, more preferably 3 $\mu$m or more and 10 $\mu$m or less. In a case where the active material has the mode diameter of 0.5 $\mu$m or more and 10 $\mu$m or less, a discharge defect is less likely to occur when a liquid composition is discharged by a liquid discharge method. Further, in a case where the active material has the mode diameter of 3 $\mu$m or more and 10 $\mu$m or less, an electrode with better electrical characteristics can be obtained. In the measured particle size distribution of the active material in the liquid composition, the diameter having the maximum value of the distribution was calculated as the mode diameter.

A method for measuring the mode diameter of the active material is not particularly limited and can be appropriately selected according to the purpose. For example, the mode diameter can be measured according to ISO 13320:2009. A device used for the measurement is not particularly limited and can be appropriately selected according to the purpose. For example, a laser diffraction particle size distribution analyzer (Mastersizer 3000, manufactured by Malvern Panalytical Ltd.) and the like can be mentioned.

The maximum particle size $D_{max}$ of the active material is preferably 30 $\mu$m or less, more preferably 20 $\mu$m or less, still more preferably 10 $\mu$m or less. In a case where the maximum particle size $D_{max}$ of the active material is 30 $\mu$m or less, a discharge defect is less likely to occur when the liquid composition is discharged by a liquid discharge method.

A method for measuring the maximum particle size $D_{max}$ of the active material is not particularly limited and can be appropriately selected according to the purpose. For example, the maximum particle size $D_{max}$ can be measured according to ISO 13320:2009. A device used for the measurement is not particularly limited and can be appropriately selected according to the purpose. For example, a laser diffraction particle size distribution analyzer (Mastersizer 3000, manufactured by Malvern Panalytical Ltd.) and the like can be mentioned.

The median diameter $D_{50}$ of the active material is preferably 15 $\mu$m or less, more preferably 10 $\mu$m or less, still more preferably 5 $\mu$m or less. In a case where the median diameter $D_{50}$ of the active material is 15 $\mu$m or less, it is possible to improve coating efficiency and battery characteristics.

A method for measuring the median diameter $D_{50}$ of the active material is not particularly limited and can be appropriately selected according to the purpose. For example, the median diameter $D_{50}$ can be measured according to ISO 13320:2009. A device used for the measurement is not particularly limited and can be appropriately selected according to the purpose. For example, a laser diffraction particle size distribution analyzer (Mastersizer 3000, manufactured by Malvern Panalytical Ltd.) and the like can be mentioned.

-Conductive Auxiliary Agent-

Examples of the conductive auxiliary agent include, but are not limited to, conductive carbon black produced by a furnace method, an acetylene method, a gasification method, or the like, and a carbon material such as a carbon nanofiber, a carbon nanotube, graphene, or a graphite powder, metallic particles such as aluminum, and metallic fibers. Note that the conductive auxiliary agent may be previously combined with the active material.

-Binder-

The binder is not particularly limited and can be appropriately selected according to the purpose. Examples of the binder include, but are not limited to, a polyamide compound, a polyimide compound, a polyamide-imide compound, ethylene-propylene-butadiene rubber (EPBR), styrene-butadiene rubber (SBR), nitrile-butadiene rubber (NBR), isoprene rubber, polyisobutene, polyethylene glycol, polymethylmethacrylate acid (PMMA), and polyethylene vinyl acetate (PEVA). Each of these can be used alone or in combination with others.

-Other Components-

Other components are not particularly limited and can be appropriately selected according to the purpose. Examples of other components include, but are not limited to, a dispersant, a surfactant, a pH adjuster, a rust inhibitor, a preservative, an antifungal agent, an antioxidant, a reduction inhibitor, an evaporation accelerator, and a chelating agent.

The average thickness of the negative electrode mixture layer is preferably 10 $\mu$m or more, and more preferably 20 $\mu$m or more. Further, the thickness is preferably 450 $\mu$m or less, and more preferably 100 $\mu$m or less. When the average thickness of the negative electrode mixture layer is 10 $\mu$m or more, the energy density of the electrochemical element is improved. When the thickness is 450 $\mu$m or less, the cycle characteristics of the electrochemical element are improved.

The average thickness of the positive electrode mixture layer is preferably 10 $\mu$m or more, and more preferably 40 $\mu$m or more. Further, the thickness is preferably 300 $\mu$m or less, and more preferably 150 $\mu$m or less. When the average thickness of the positive electrode mixture layer is 20 $\mu$m or more, the energy density of the electrochemical element is improved. When the thickness is 300 $\mu$m or less, the load characteristics of the electrochemical element are improved.

<Porous Insulating Layer>

The porous insulating layer contains a resin and an inorganic oxide, and further contains other components as necessary.

The porous insulating layer is formed in a state of being integrated with the electrode mixture layer and has a porous structure having a resin backbone. Preferably, the inorganic oxide is dispersed in a state of being integrated with the resin backbone partially or entirely, and the porosity of the porous insulating layer in the thickness direction is uniform.

-Resin-

As the resin, a resin obtained by polymerizing a polymerizable compound contained in a porous-insulating-layer liquid composition described later is used.

Examples of the resins include, but are not limited to, acrylate resins, methacrylate resins, urethane acrylate resins, vinyl ester resins, unsaturated polyester resins, epoxy resins, oxetane resins, vinyl ether resins, and resins utilizing an ene-thiol reaction. Among these, an acrylate resin, a methacrylate resin, a urethane acrylate resin, and a vinyl ester resin are preferable from the viewpoint that a resin backbone is easily formed using radical polymerization of a polymerizable compound.

The resin preferably has a glass transition temperature ($T_g$) of 100 °C or higher. The glass transition temperature is preferably 100 °C or higher from the viewpoint that the formed porous insulating layer does not change in shape even at a high temperature and the insulating property is maintained, more preferably 110 °C or higher, and still more preferably 120 °C or higher.

-Inorganic Oxide-

Examples of the inorganic oxide include, but are not limited to, metal oxides having a high electrical insulating property. The inorganic oxide is in a particulate form, and for example, industrially synthesized or pulverized particles, ceramics, particles derived from mineral resources, and the like can be appropriately used according to the purpose.

Examples of the inorganic oxides include, but are not limited to, aluminum oxide, titanium dioxide, barium titanate, zirconium dioxide, nickel oxide, manganese oxide, vanadium dioxide, silicon dioxide, cordierite, steatite, forsterite, mullite and zeolite. Each of these can be used alone or in combination with others. Among these, a high-purity synthetic product is preferable, high-purity aluminum oxide ($\alpha$-alumina), silicon dioxide, and zirconium dioxide are more preferable, and aluminum oxide is particularly preferable, from the viewpoint of the magnitude of electrical resistance and stability.

As the aluminum oxide, a commercially available product can be used, and examples of the commercially available product include, but are not limited to: AKP-15, AKP-20, AKP-30, AKP-50, AKP-53, AKP-700, AKP-3000, AA-03, AA-04, AA-05, AA-07, AA-1.5, AKP-G07, and AKP-G15 (manufactured by Sumitomo Chemical Co., Ltd.); LS-235, LS-235C, LS-711, LS-711C, LS-500, and LS-250 (manufactured by Nippon Light Metal Co., Ltd.); SERATH00610 and SERATH02025 (manufactured by KINSEI MATEC CO., LTD.); and TM-DA, TM-DAR, and TM-T 5D (manufactured by TAIMEI CHEMICALS CO., LTD.).

-Other Components-

The other components in the porous insulating layer are not particularly limited, may be appropriately selected according to the purpose, and examples of other components include, but are not limited to, a dispersant, a viscosity modifier, and a surfactant.

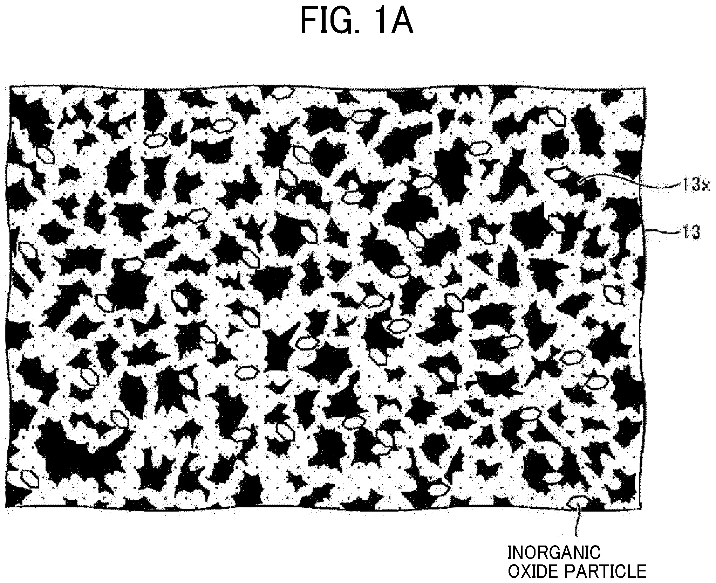

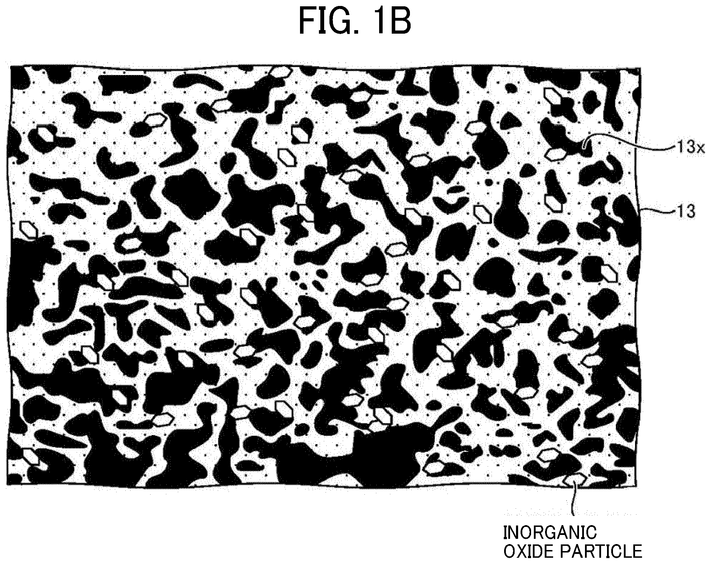

FIG. 1A and FIG. 1B are schematic views of a porous insulating layer 13 according to the present disclosure, where FIG. 1A is a schematic plan view and FIG. 1B is a schematic cross-sectional view.

The porous insulating layer 13 is formed of a backbone containing a resin as a main component, and all or a part of the dispersed inorganic oxide is integrated with the resin backbone. Here, the expression "containing a resin as a main component" means that the resin accounts for 50% by mass or more of all substances forming the porous insulating layer.

The structure of the porous insulating layer 13 is not particularly limited and may be appropriately selected according to the purpose. In the case of secondary battery, the porous insulating layer 13 preferably has a network structure (i.e., co-continuous structure) having a resin backbone and branches extending in the three-dimensional space, and communicating voids, for ensuring permeability of an electrolyte and favorable ion conductivity. The term "co-continuous structure" herein means a structure including two or more substances each having a continuous structure and forming no interface, and refers to, in the present embodiment, a structure where both of a resin phase and a pore phase or liquid phase consisting of liquid are three-dimensional branched mesh continuous phases. Such a structure can be formed by, e.g., polymerizing a porous-insulating-layer liquid composition containing a polymerizable compound (i.e., monomer) by a polymerization-induced phase separation method.

The porous insulating layer 13 has a large number of voids 13x, and it is preferable that one of the voids 13x is connected to other voids 13x around the one of the voids 13x so that the voids 13x extend three dimensionally (i.e., have a communicating property). When the voids of the porous insulating layer communicate with each other, the permeability of an electrolyte and the ion permeability are increased, and thus the cycle characteristics of the electrochemical element are improved.

The cross-sectional shape of the voids of the porous insulating layer 13 may be various shapes such as a substantially circular shape, a substantially elliptical shape, and a substantially polygonal shape, and various sizes. The cross-sectional shape of each void may be identical to or varied from each other.

-Average Thickness of Porous Insulating Layer-

The average thickness of the porous insulating layer is an average thickness from a boundary portion where the proportion of the porous insulating layer is 50% or more in the boundary region between the porous insulating layer and the electrode mixture layer to the farthest portion of the surface of the porous insulating layer viewed from the electrode base.

The average thickness of the porous insulating layer is not particularly limited and can be appropriately selected corresponding to a purpose, but the average thickness thereof is preferably 3 μm or more, and preferably 50 μm or less. The average thickness of the porous insulating layer is preferably 3 μm or more, more preferably 5 μm or more, and still more preferably 10 μm or more because the electrical insulating properties of the porous insulating layer are improved. The average thickness of the porous insulating layer is preferably 50 μm or less, more preferably 40 μm or less, and still more preferably 30 μm or less, because the distance between the positive electrode and the negative electrode is reduced, which facilitates the movement of ions and improves the cycle characteristics of the electrochemical element.

In addition, it is preferable that at least a part of the porous insulating layer follows the unevenness of the surface of the electrode mixture layer, permeates into or is integrated with the voids, and is present inside the electrode mixture layer by 0.5% or more with respect to the average thickness of the porous insulating layer. In a case of 0.5% or more, an anchor effect is obtained between the electrode mixture layer and the porous insulating layer, and peeling or displacement of the porous insulating layer due to compression is prevented, which is preferable, and 1.0% or more is even more preferable.

-Average Porosity of Porous Insulating Layer-

The proportion of the voids (i.e., average porosity) of the porous insulating layer is determined by image analysis of a cross-sectional photograph of the porous insulating layer.

The average porosity of the porous insulating layer is preferably 30% or more, more preferably 30% or more and 60% or less, and still more preferably 35% or more and 50% or less. When the average porosity is 30% or more, ion permeability is improved. When the average porosity is 60% or less, the resin serving as the backbone of the porous insulating layer is strengthened, and the compression-resistance property is improved.

-Distribution of Average Porosity-

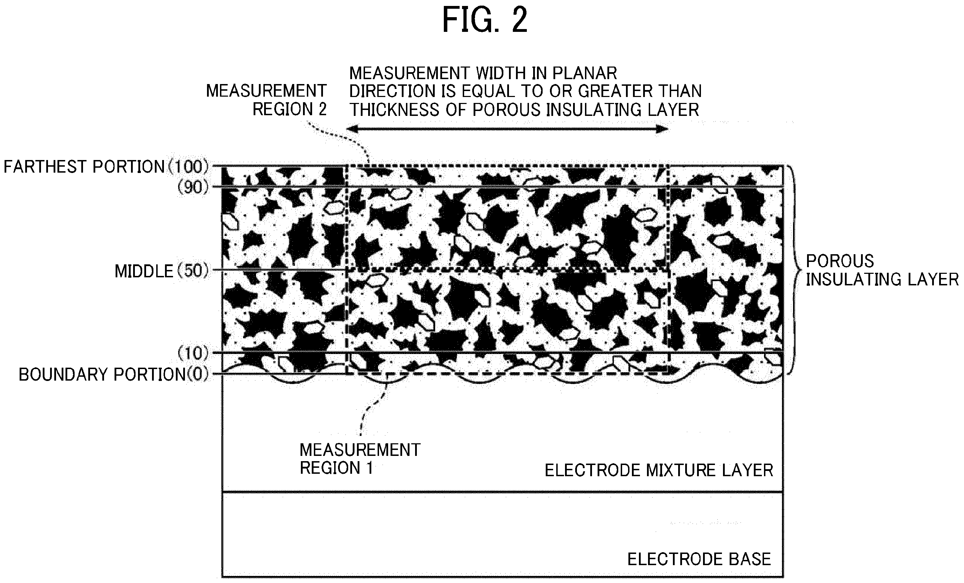

The average porosity of the porous insulating layer is preferably uniform in the thickness direction. Specifically, as illustrated in FIG. 2, with respect to the thickness of the porous insulating layer, a boundary portion where the proportion of the porous insulating layer is 50% or more in the boundary region between the porous insulating layer and the electrode mixture layer is defined as 0, and the farthest position of the surface of the porous insulating layer viewed from the electrode base is defined as 100. Here, the "boundary portion where the proportion of the porous insulating layer is 50% or more in the boundary region" refers to a boundary portion where the proportion of the number of pixels of the porous insulating layer to the total number of pixels of the porous insulating layer and the electrode base layer is 50 % or more in image analysis of the boundary region. When a region from 0 to 100 is divided into two regions, a measurement region 1, which is included in a region from 0 to 50 and has the same length as the thickness of the porous insulating layer in the planar direction, is compared with a measurement region 2, which is included in a region from 50 to 100 and has the same length as the thickness of the porous insulating layer in the planar direction, a difference between the average porosity in a range of 10% of the thickness of the porous insulating layer from the electrode mixture layer and the average porosity in a range of 10% of the thickness of the porous insulating layer from the side opposite to the electrode mixture layer is preferably within $\pm$ 20%, and more preferably within $\pm$ 10%. When the difference is within $\pm$ 20%, the average porosity of the porous insulating layer is uniformly distributed in the thickness direction.

The distribution of the average porosity can be calculated by preparing a cross section with a cross-section polisher and then performing image analysis on an image observed with a scanning electron microscope (SEM). In addition, regarding the image analysis, any method or condition that can distinguish between the resin backbone and the inorganic oxide is acceptable.

As the image analysis, in addition to analysis based on color or brightness, analysis by element mapping or the like may be used.

-Void Size-

The void size of the porous insulating layer is not particularly limited and may be appropriately selected according to the purpose. In the secondary battery, the void size is preferably 0.1 $\mu$m or more, more preferably 0.5 $\mu$m or more. In addition, the size of the voids is preferably 10 $\mu$m or less, and more preferably 5 $\mu$m or less. When the void size is 0.1 $\mu$m or more, the permeability of the electrolytic solution into the porous insulating layer and the electrode is improved. When the size of the voids is 10 $\mu$m or less, the compression-resistance property of the porous insulating layer is improved.

Here, the void size refers to the length of the longest portion of one void portion in the cross-sectional shape of the porous insulating layer. The void size can be determined, for example, from a cross-sectional photograph taken with a scanning electron microscope (SEM) after forming a cross section using a razor, ion milling, a micro-microtome, or the like.

-Coverage of Porous Insulating Layer-

The porous insulating layer preferably covers 90% or more of the surface of the electrode mixture layer in total. The coverage is preferably 90% or more because the compression-resistance property of the porous insulating layer is improved, more preferably 95% or more, still more preferably 98% or more, and particularly preferably 99% or more.

The coverage can be measured, for example, by obtaining an observation image of the surface and calculating the proportion of the covered portion from the image analysis or analysis result. In order to obtain the observation image of the surface, an apparatus or an analysis method capable of clearly distinguishing the porous insulating layer and the electrode mixture layer, such as brightness, hue, electron beam reflection, and element distribution, is used. Specifically, an optical microscope, a scanning electron microscope, or energy dispersive X-ray spectrometry (EDS) can be used.

In the present disclosure, the area ratio (a:b) of the resin backbone (a) and the inorganic oxide (b) in the porous insulating layer ranges from 99.9%:0.1% to 90%: 10%, preferably from 99.8%:0.2% to 92%:8%, and more preferably from 99.6%:0.4% to 94%:6%. When the area ratio (i.e., content) of the inorganic oxide is 0.1% or more, the compression resistant strength of the porous insulating layer is improved. When the area ratio (i.e., content) of the inorganic oxide is 10% or less, the voids of the porous insulating layer are less likely to be closed when the electrochemical element is repeatedly charged, and thus the performance of the electrochemical element is improved.

-Average Primary Particle Size-

The average primary particle size of the inorganic oxide in the porous insulating layer refers to the average diameter of non-aggregated inorganic oxide in the cross section of the porous insulating layer. In a case where the inorganic oxide is a particle other than a sphere, the longest portion of the diameter of the particle is defined as the primary particle size regardless of the aspect ratio. The observation of the cross section can be obtained, for example, by image analysis from a cross-sectional photograph taken with a scanning electron microscope (SEM) after forming a cross section using a razor, ion milling, a micro-microtome, or the like.

The primary particle size of the inorganic oxide in the porous insulating layer is preferably 500 nm or less, more preferably 400 nm or less, and still more preferably 300 nm or less. When the average primary particle size is 500 nm or less, the compression resistant strength of the porous insulating layer can be improved by adding a small amount of the inorganic oxide.

The shape of the primary particles of the inorganic oxide is not particularly limited and may be appropriately selected according to the purpose, but is preferably a sphere, an elliptic sphere, or an amorphous shape formed by connection or combination thereof. Since the particles have a shape with few flat surfaces, for example, a sphere, an elliptic sphere, or an amorphous shape, the contact points between the particles are small, and the particles are easily uniformly dispersed in the porous insulating layer, the compression-resistance property is improved by addition of a small amount.

In the present specification and claims, the shape of the inorganic oxide is defined as a sphere if $y=1$ and $z=1$, an elliptic sphere if $y=1$ and $z \geq 1.1$, a rod or needle if $y=1$ and $z \geq 4$, and a plate if $y \geq 4$ and $z \geq 4$, when the smallest length of the primary particle in the xyz directions is defined as $x=1$.

-Average Dispersed Particle Size-

The average dispersed particle size of the inorganic oxide in the porous insulating layer refers to an average diameter of a simple substance and an aggregate of the inorganic oxide in a cross section of the porous insulating layer. The average dispersed particle size can be determined by image analysis from a cross-sectional photograph taken with a scanning electron microscope (SEM) in the same manner as the average primary particle size.

The average dispersed particle size of the inorganic oxide in the porous insulating layer is preferably 900 nm or less, more preferably 600 nm or less, and still more preferably 500 nm or less.

When the average dispersed particle size of the inorganic oxide is 900 nm or less, the compression resistant strength of the porous insulating layer can be improved by the addition of a small amount of the inorganic oxide, and the compression resistant strength and bending resistance of the porous insulating layer are improved because the resin backbone is not fragmented owing to the presence of the inorganic oxide.

-Distribution of Inorganic Oxide-

The inorganic oxide is preferably uniformly dispersed in the thickness direction of the porous insulating layer. The dispersibility of the inorganic oxide can be examined from the distribution in the thickness direction of the inorganic oxide dispersed in the cross section of the porous insulating layer.

Specifically, as illustrated in FIG. 2, with respect to the thickness of the porous insulating layer, a boundary portion where the proportion of the porous insulating layer is 50% or more in the boundary region between the porous insulating layer and the electrode mixture layer is defined as 0, and the farthest position of the surface of the porous insulating layer viewed from the electrode base is defined as 100. When a region from 0 to 100 is divided into two regions, a measurement region 1, which is included in a region from 0 to 50 and has the same length as the thickness of the porous insulating layer in the planar direction, is compared with a measurement region 2, which is included in a region from 50 to 100 and has the same length as the thickness of the porous insulating layer in the planar direction, a difference between the area ratio of the inorganic oxide in a range of 10% of the thickness of the porous insulating layer from the electrode mixture layer and the area ratio (i.e., content) of the inorganic oxide in a range of 10% of the thickness of the porous insulating layer from the side opposite to the electrode mixture layer is preferably within $\pm$ 3%, more preferably within $\pm$ 1%, and still more preferably within $\pm$ 0.5%.

When the difference in the area ratio is within $\pm$ 3% and the dispersion of the inorganic oxide is uniform, the load to the porous insulating layer is uniformly dispersed, and the compression-resistance property in the thickness direction is improved.

The distribution of the inorganic oxide can be calculated by preparing a cross section with a cross-section polisher, and then performing image analysis on an image observed with a scanning electron microscope (SEM). In addition, regarding the image analysis, any method or condition that can distinguish between the porous insulating layer and the inorganic oxide is acceptable. As the image analysis, in addition to analysis based on color or brightness, analysis by element mapping or the like may be used.

<Other Layers>

The other layers in the electrode are not particularly limited and can be appropriately selected according to the purpose. Examples of other layers include, but are not limited to, a protective layer.

(Electrode Production Method and Electrode Production Apparatus)

The electrode production method of the present disclosure is an electrode production method for producing the electrode of the present disclosure, and includes an application step and a curing step, preferably includes a heating step, and further includes other steps as necessary.
The electrode production apparatus of the present disclosure is an electrode production apparatus for producing the electrode of the present disclosure, and includes an application unit and a curing unit, preferably includes a heating unit, and further includes other units as necessary.
Examples of a method of forming the porous insulating layer include, but are not limited to, a method of forming a layer by applying a porous-insulating-layer liquid composition to cover the electrode mixture layer. The porous-insulating-layer liquid composition is applied to the electrode mixture layer and then irradiated with active energy rays or the like to make the polymerizable compound react, thereby causing polymerization-induced phase separation. Immediately after the reaction, a liquid called porogen is contained in the coating film in order to form voids, but by removing this porogen by heating or the like, communicating pores can be formed.
In the porous-insulating-layer liquid composition, the inorganic oxide is preferably uniformly dispersed in a solvent in advance. By uniformly dispersing the inorganic oxide, the inorganic oxide is integrated into the resin backbone of the porous insulating layer, which improves the compression resistant strength.

<Porous-insulating-layer Liquid Composition>

The porous-insulating-layer liquid composition contains an inorganic oxide and a polymerizable compound, preferably contains a solvent, a polymerization initiator, and a dispersant, and further contains other components as necessary.

-Inorganic Oxide-

The inorganic oxide is the same as the inorganic oxide in the porous insulating layer described above.
The content of the inorganic oxide is preferably 10% by mass or more, and more preferably 20% by mass or more, relative to the total amount of the porous-insulating-layer liquid composition. In addition, the content is preferably 60% by mass or less, and more preferably 50% by mass or less.

-Polymerizable Compound-

The polymerizable compound corresponds to a precursor of a resin for forming a backbone of the porous insulating layer, and is a compound capable of forming a crosslinkable structure by light irradiation or heat.
The polymerizable compound preferably has a radical polymerizable functional group. Examples of the polymerizable compound include, but are not limited to, monofunctional, bifunctional, or trifunctional or higher radical polymerizable compounds, functional monomers, and radical polymerizable oligomers. Each of these can be used alone or in combination with others. Among these, bifunctional or higher radical polymerizable compounds are preferred in terms of compression resistant strength.
Examples of the monofunctional radical polymerizable compound include, but are not limited to, 2-(2-ethoxyethoxy) ethyl (meth) acrylate, methoxypolyethylene glycol mono (meth) acrylate, phenoxypolyethylene glycol (meth) acrylate, 2-(meth) acryloyloxyethyl succinate, 2-ethylhexyl (meth) acrylate, 2-hydroxyethyl (meth) acrylate, 2-hydroxypropyl (meth) acrylate, tetrahydrofurfuryl (meth) acrylate, 2-ethylhexyl carbitol (meth) acrylate, 3-methoxybutyl (meth) acrylate, benzyl (meth) acrylate, cyclohexyl (meth) acrylate, isoamyl (meth) acrylate, isobutyl (meth) acrylate, methoxytriethylene glycol (meth) acrylate, phenoxytetraethylene glycol (meth) acrylate, cetyl (meth) acrylate, isostearyl (meth) acrylate, stearyl (meth) acrylate, and styrene monomer. Each of these can be used alone or in combination with others.
Examples of the bifunctional radical polymerizable compound include, but are not limited to, 1,3-butanediol di(meth)acrylate, 1,4-butanediol di(meth)acrylate, 1,6-hexanediol di(meth)acrylate, diethylene glycol di(meth)acrylate, polyethylene glycol di(meth)acrylate, neopentyl glycol di(meth)acrylate, EO-modified bisphenol A di(meth)acrylate, EO-modified bisphenol F di(meth)acrylate, and tricyclodecanedimethanol di(meth)acrylate. Each of these can be used alone or in combination with others.

Examples of the trifunctional or higher radical polymerizable compound include, but are not limited to, trimethylol propane tri (meth) acrylate, trimethylol propane ethoxytri (meth) acrylate, EO-modified trimethylolpropane tri (meth) acrylate, PO-modified trimethylol propane tri (meth) acrylate, caprolactone modified trimethylol propane tri (meth) acrylate, HPA-modified trimethylol propane tri (meth) acrylate, pentaerythritol tri (meth) acrylate, pentaerythritol tetra (meth) acrylate, glycerol tri (meth) acrylate, glycerine propoxytri (meth) acrylate, ECH-modified glycerol tri (meth) acrylate, EO-modified glycerol tri (meth) acrylate, PO-modified glycerol tri (meth) acrylate, tris ((meth) acryloxyethyl) isocyanurate, dipentaerythritol hexa (meth) acrylate, caprolactone modified dipentaerythritol hexa (meth) acrylate, dipentaerythritol hydroxypenta (meth) acrylate, alkyl-modified dipentaerythritol penta (meth) acrylate, alkyl-modified dipentaerythritol tetra (meth) acrylate, alkyl-modified dipentaerythritol tri (meth) acrylate, dimethylolpropane tetra (meth) acrylate, pentaerythritol ethoxytetra (meth) acrylate, EO-modified phosphoric acid tri (meth) acrylate, and 2,2,5,5-tetrahydroxymethylcyclopentanone tetra (meth) acrylate. Each of these can be used alone or in combination with others.

-Polymerization Initiator-

As the polymerization initiator, for example, a photoradical generator can be used.

Examples of the photoradical generator include, but are not limited to, benzophenone, acetophenone derivatives, $\alpha$-hydroxy- or $\alpha$-aminocetophenone, 4-aroyl-1,3-dioxolane, benzyl ketal, 2,2-diethoxyacetophenone, p-dimethylaminoacetophene, p-dimethylaminopropiophenone, benzophenone, 2-chlorobenzophenone, pp'-dichlorobenzophene, pp'-bis-diethylaminobenzophenone, Michler's ketone, benzyl, benzoin, benzyl dimethyl ketal, tetramethylthiuram monosulphide, thioxanthone, 2-chlorothioxanthone, 2-methylthioxanthone, azobisisobutyronitrile, benzoin peroxide, di-tert-butyl peroxide, 1-hydroxycyclohexylphenyl ketone, 2-hydroxy-2-methyl-1-phenyl-1-one, 1-(4-isopropylphenyl)-2-hydroxy-2-methylpropan-1-one, methylbenzoylformate, zoyne isopropyl ether, benzoin methyl ether, benzoin ethyl ether, benether, benzoin isobutyl ether, benzoin n-butyl ether, benzoin alkyl ethers or esters such as benzoin n-propyl, 1-hydroxy-cyclohexyl-phenyl-ketone, 2-benzyl-2-dimethylamino-1 -(4-morpholinophenyl)-butanone-1, 1-hydroxy-cyclohexyl-phenyl-ketone, 2,2-dimethoxy-1,2-diphenylethane-1-one, bis($\eta$5-2,4-cyclopentadiene-1-yl)-bis(2,6-difluoro-3-(1H-pyrrol-1-yl)-phenyl) titanium, bis(2,4,6-trimethylbenzoyl)-phenylphosphine oxide, 2-methyl-1[4-(methylthio)phenyl]-2-morfolinopropan-1-one, 2-hydroxy-2-methyl-1-phenyl-propane-1-one (DAROCUR 1173), bis(2,6-dimethoxybenzoyl)-2,4,4-trimethyl-pentylphosphine oxide, 1-[4-(2-hydroxyethoxy)-phenyl]-2-hydroxy-2-methyl-1-propane-1-one monoacylphosphine oxide, bisacylphosphine oxide or titanocene, fluoresceine, anthraquinone, thioxanthone or xanthone, lophine dimer, trihalomethyl compounds or dihalomethyl compounds, active ester compounds, and organoboron compounds. Furthermore, a photo-crosslinking type radical generator such as a bisazide compound, a thermal polymerization initiator which generates a radical by heat, and a photoacid generator which generates an acid by light irradiation may be used. Each of these can be used alone or in combination with others.

- Solvent -

The solvent is not particularly limited and may be appropriately selected depending on the intended purpose, so long as the solvent can dissolve the components of the porous-insulating-layer liquid composition other than the inorganic oxide. Further, a substance functioning as a porogen is preferably contained, and is mixed to form pores in the porous insulating layer after curing.

The porogen can be arbitrarily selected as long as it is a liquid substance capable of causing phase separation in the process of polymerization of the polymerizable compound.

Examples of the solvent include, but are not limited to, ethers such as diethylene glycol monomethyl ether, ethylene glycol monobutyl ether, and dipropylene glycol monomethyl ether; higher alcohols such as 1-octanol, 2-ethylhexanol, 1-nonanol, 1-decanol, undecyl alcohol, and lauryl alcohol; lactones such as $\gamma$-butyrolactone; esters such as propylene carbonate, methyl tetradecanate, methyl decanoate, and methyl myristate; amides such as N,N-dimethylacetamide; and hydrocarbons such as tridecane, tetradecane, and pentadecane. Each of these can be used alone or in combination with others.

-Dispersant-

In order to uniformly disperse the inorganic oxide in the solvent, a dispersant such as a surfactant or a polymer compound having an adsorbing group may be used. As the dispersant of a polymer compound, a copolymer having an adsorbing group with a high affinity for an inorganic oxide and a dispersing group with a high affinity for a solvent is preferably used.

As the dispersant, a commercially available product can be used, and examples of the commercially available product include, but are not limited to, MEGAFAC F173, MEGAFAC F444, MEGAFAC F470 (manufactured by DIC Corporation), MALIALIM AAB-0851, MALIALIM AFB-1521, MALIALIM AKM-0531, MALIALIM AWS-0851, MALIALIM HKM-50A, MALIALIM SC-0708A, MALIALIM SC-0505K, MALIALIM SC-1015F (manufactured by NOF CORPORATION), DISPER-BYK103, DISPER-BYK2000 (manufactured by BYK- Chemie). Each of these can be used alone or in combination with others.

-Other Components-

The porous-insulating-layer liquid composition may further contain other components according to purposes such as adjustment of viscosity, adjustment of surface tension, control of solvent evaporation, improvement of additive solubility, improvement of dispersibility of inorganic oxides, and sterilization. Examples of the other components include, but are not limited to, a surfactant, a pH adjuster, a rust inhibitor, a preservative, an antifungal agent, an antioxidant, a reduction inhibitor, an evaporation accelerator, and a chelating agent.

A method for preparing the porous-insulating-layer liquid composition is not particularly limited and can be appropriately selected according to the purpose. For example, the porous-insulating-layer liquid composition can be produced by obtaining a dispersion liquid of an inorganic oxide using a disperser, and then adding a polymerizable compound for forming a porous structure and other components. Specifically, a solvent, an inorganic oxide, and a dispersant are preliminarily stirred, and then a dispersion liquid of the inorganic oxide is obtained using a disperser. As the disperser, for example, a homomixer, a homogenizer, an ultrasonic disperser, a ball mill, a bead mill, a cavitation mill, or the like can be used according to the purpose.

<Application Step and Application Unit>

The application step is a step of applying a porous-insulating-layer liquid composition containing an inorganic oxide, a polymerizable compound, and a solvent onto the electrode mixture layer, and is performed by an application unit.

The application method is not particularly limited, but a method capable of uniformly applying the liquid to the electrode mixture layer is preferable. Examples of the application method include, but are not limited to, a spin coating method, a casting method, a micro gravure coating method, a gravure coating method, a bar coating method, a roll coating method, a wire bar coating method, a dip coating method, a slit coating method, a capillary coating method, a spray coating method, a dispenser method, a nozzle coating method, an inkjet method, a gravure printing method, a screen printing method, a flexographic printing method, an offset printing method, and a reverse printing method. Among these methods, for reasons that the discharge position can be controlled and the porous-insulating-layer liquid composition can be applied to the electrode mixture layer in a non-contact manner, a liquid discharge method such as an inkjet method, a spray coating method, or a dispenser method is preferable, and an inkjet method is particularly preferable.

Examples of the ink jet method include, but are not limited to, a method of applying mechanical energy to the porous-insulating-layer liquid composition and a method of applying thermal energy to the porous-insulating-layer liquid composition. Among these, the method of applying mechanical energy to the porous-insulating-layer liquid composition is preferable from the viewpoint of dispersion stability.

Examples of the method of applying mechanical energy include, but are not limited to, a piezo method in which a voltage is applied to a piezo element in close contact with a liquid chamber to deform the liquid chamber and thus discharge a porous-insulating-layer liquid composition by pushing the liquid composition out of a nozzle.

Examples of the method of applying thermal energy include, but are not limited to, a thermal method in which heat is rapidly applied to a porous-insulating-layer liquid composition by a heater or the like, and bubbles generated when the liquid composition for the porous insulating layer boils are utilized.

In the case of using the liquid discharge method, a technique using a liquid discharge principle of a well-known liquid discharge device may be applied. In this case, it is preferable to use a solvent to which a channel and a nozzle of a liquid discharge head installed in the liquid discharge device are resistant.

<Curing Step and Curing Unit>

The curing step is a step of curing the applied porous-insulating-layer liquid composition, and is performed by a curing unit.

The curing step is preferably performed by irradiating the applied porous-insulating-layer liquid composition with active energy rays.

The active energy rays are not particularly limited as long as they can impart energy necessary for proceeding a polymerization reaction of the polymerizable compound in the porous-insulating-layer liquid composition. Examples thereof include, but are not limited to, ultraviolet rays (UV), electron beams (EB), and x-rays (X-Ray), but UV is preferred from a curing property viewpoint.

An ultraviolet light source used as an active energy ray irradiation unit may be appropriately selected according to an absorption spectrum of a reactive substance or the like. As an example of the light source, for example, a low-pressure mercury lamp, a high-pressure mercury lamp, a metal halide lamp, a hot cathode tube, a cold cathode tube, a UV-LED, or the like can be applied.

In the case of using an active energy ray irradiation device, it is preferable that the device be equipped with equipment that enables irradiation in an inert gas or vacuum because a decrease in irradiation intensity or a side reaction due to a gas in the atmosphere such as oxygen occurs.

The illumination (also referred to as lamp intensity, lamp illumination, or the like) in the irradiation is preferably $1.0 \, W/cm^2$ or more from the viewpoint of the reactivity of the components in the porous-insulating-layer liquid composition.

<Heating Step and Heating Unit>

The heating step is a step of heating and drying the porous-insulating-layer liquid composition after curing the porous-insulating-layer liquid composition, and is performed by a heating unit.

The heating unit is not particularly limited and can be appropriately selected according to the purpose. Examples thereof include a method of heating a discharge surface with a resistance heater, an infrared heater, a fan heater, or the like, and a method of drying from a back side of a coated surface with a hot plate, a drum heater, or the like. Each of these can be used alone or in combination with others. Among these, from the viewpoint of uniformly heating and drying the discharge surface, a resistance heater, an infrared heater, and a fan heater capable of drying the discharge surface in a non-contact manner are preferable.

The heating temperature is not particularly limited and can be appropriately selected according to the purpose, but is preferably 70 °C or higher and 150 °C or less. When the heating temperature is 70 °C or higher, not only the solvent in the porous insulating layer can be sufficiently removed, but also the compression resistant strength is increased by heating, which is preferable. When the heating temperature is 150 °C or less, deterioration of the electrode mixture layer and generation of pinholes due to bumping of the porous-insulating-layer liquid composition are prevented, and the insulating property is improved, which is preferable.

<Other Steps and Other Units>

Examples of the other steps include, but are not limited to, an electrode mixture layer forming step and a control step.

Examples of the other units include, but are not limited to, an electrode mixture layer forming unit and a control unit.

-Electrode Mixture Layer Forming Step and Electrode Mixture Layer Forming Unit-

The electrode mixture layer can be formed on the electrode base using an electrode-mixture-layer liquid composition.

The electrode-mixture-layer liquid composition includes an active material, a conductive auxiliary agent, a solvent, and a dispersant, and, if necessary, other components.

The active material and the conductive auxiliary agent are the same as the active material and the conductive auxiliary agent in the electrode mixture layer described above.

- Solvent -

Examples of the solvent include, but are not limited to, an aqueous dispersion medium such as water, ethylene glycol, or propylene glycol, N-methyl-2-pyrrolidone, 2-pyrrolidone, cyclohexanone, butyl acetate, mesitylene, 2-n-butoxymethanol, 2-dimethylethanol, and N,N-dimethylacetamide. Each of these can be used alone or in combination with others.

-Dispersant-

The dispersant is not particularly limited as long as the dispersant can improve dispersibility of the active material in the electrode-mixture-layer liquid composition, and the dispersant can be appropriately selected according to the purpose. Examples of the dispersant include, but are not limited to, a polymer dispersant such as a polyethylene oxide-based dispersant, a polypropylene oxide-based dispersant, a polycarboxylic acid-based dispersant, a naphthalenesulfonic acid formalin condensate-based dispersant, a polyethylene glycol-based dispersant, a polycarboxylic acid partial alkyl ester-based dispersant, a polyether-based dispersant, or a polyalkylenepolyamine-based dispersant, a low-molecular-weight dispersant such as an alkylsulfonic acid-based dispersant, a quaternary ammonium-based dispersant, a higher alcohol alkylene oxide-based dispersant, a polyhydric alcohol ester-based dispersant, or an alkylpolyamine-based dispersant, and an inorganic dispersant such as a polyphosphate-based dispersant. Each of these can be used alone or in combination with others.

-Other Components-

Other components are not particularly limited and can be appropriately selected according to the purpose. Examples of other components include, but are not limited to, a binder, a surfactant, a pH adjuster, a rust inhibitor, a preservative, an antifungal agent, an antioxidant, a reduction inhibitor, an evaporation accelerator, and a chelating agent.

A method for applying the electrode-mixture-layer liquid composition is not particularly limited. Examples of the method include, but are not limited to, a liquid discharge method such as an inkjet method, a spray coating method, or a dispenser method, a spin coating method, a casting method, a micro gravure coating method, a gravure coating method, a bar coating method, a roll coating method, a wire bar coating method, a dip coating method, a slit coating method, a capillary coating method, a nozzle coating method, a gravure printing method, a screen printing method, a flexographic printing method, an offset printing method, and a reverse printing method. Among these methods, an inkjet method is particularly preferable. By using the inkjet method, an electrode can be produced in any shape in a non-contact manner. As a result, there is an advantage such as little loss of the active material caused by die punching in the electrode production process.

[Embodiment in which Porous-Insulating-Layer Liquid Composition is Directly Discharged onto Printing Base (Electrode Including Electrode Mixture Layer on Base) to Form Porous Insulating Layer]

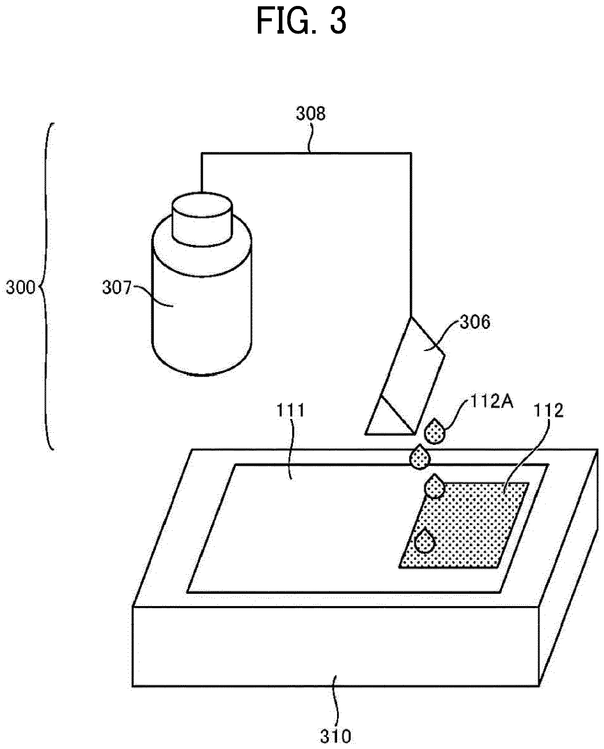

FIG. 3 is a schematic diagram illustrating an example of an electrode production method according to the present embodiment.

A porous-insulating-layer liquid composition 112A is stored in a tank 307 of a liquid discharge device 300, and is supplied from the tank 307 to a liquid discharge head 306 through a tube 308. The number of liquid discharge devices is not limited to one, and may be two or more.

When an electrode is produced, an printing base 111 is placed on a stage 310, and then droplets of the porous-insulating-layer liquid composition 112A are discharged from the liquid discharge head 306 onto the printing base 111. At this time, the stage 310 may be moved, and the liquid discharge head 306 may be moved. The discharged porous-insulating-layer liquid composition 112A becomes a porous insulating layer 112.

In addition, the liquid discharge device 300 may be provided with a mechanism for capping the nozzle in order to prevent drying when the porous-insulating-layer liquid composition 112A is not discharged from the liquid discharge head 306.

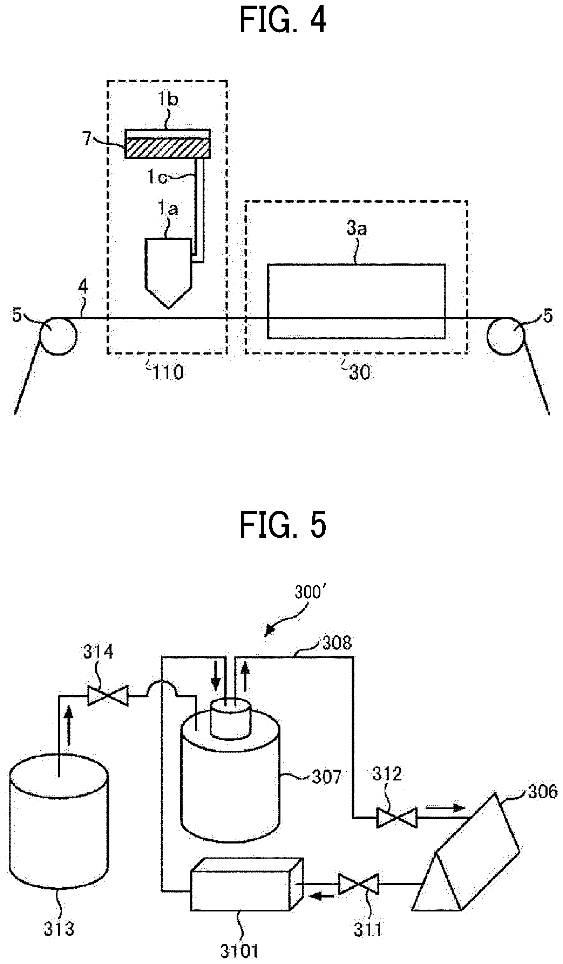

FIG. 4 is a schematic diagram illustrating an example of an electrode production apparatus (i.e., liquid discharge device) for achieving an electrode production method of the present embodiment.

The electrode production apparatus is an apparatus for producing electrodes using the above-described porous-insulating-layer liquid composition. The electrode production apparatus includes a printing unit 110 that performs an application step of applying a porous-insulating-layer liquid composition onto a printing base (i.e., an electrode including an electrode mixture layer on a base) 4 to form a liquid composition layer, and a heating unit 30 that performs a heating step of heating the liquid composition layer and removing liquid remaining in the liquid composition layer to obtain a porous insulating layer. The electrode production apparatus includes a conveyance unit 5 that conveys the printing base 4, and the conveyance unit 5 sequentially conveys the printing base 4 at a pre-set speed to the printing unit 110 and the heating unit 30, in this order.

-Printing Unit 110-

The printing unit 110 includes a printer 1a, which is an example of an application unit that realizes the application step of applying the porous-insulating-layer liquid composition onto the printing base (i.e., the electrode including an electrode mixture layer on a base) 4, a storage container 1b that contains the porous-insulating-layer liquid composition, and a supply tube 1c that supplies the porous-insulating-layer liquid composition stored in the storage container 1b to the printer 1a.

The storage container 1b contains a porous-insulating-layer liquid composition 7, and the printing unit 110 discharges the porous-insulating-layer liquid composition 7 from the printer 1a and applies the porous-insulating-layer liquid composition 7 onto the printing base 4 to form a liquid composition layer in a thin film shape. The storage container 1b may be integrated with the electrode production apparatus or may be detachable from the electrode production apparatus. Further, the storage container 1b may be a container used for filling a storage container integrated with the electrode production apparatus or a storage container detachable from the electrode production apparatus.

The storage container 1b and the supply tube 1c can be arbitrarily selected as long as it can stably store and supply the porous-insulating-layer liquid composition 7. A material forming the storage container 1b and the supply tube 1c preferably has a light-blocking property against an ultraviolet to relatively short wavelength visible region. Thus, if the porous-insulating-layer liquid composition 7 contains a polymerizable compound, the polymerizable compound is prevented from initiating polymerization by outside light.

-Heating Unit 30-

As illustrated in FIG. 4, the heating unit 30 includes a heater 3a, and performs a liquid removal step of heating, by the heater 3a, the liquid composition layer formed by the printing unit 110 to dry and remove liquid remaining in the liquid composition layer. As a result, a porous insulating layer can be formed. The heating unit 30 may remove the liquid under reduced pressure.

If the porous-insulating-layer liquid composition 7 contains a polymerizable compound, the heating unit 30 may perform a polymerization acceleration step of heating the liquid composition layer by the heater 3a to further accelerate the polymerization reaction, and an initiator removal step of removing a photopolymerization initiator remaining in the liquid composition layer by heating and drying with the heater 3a. These polymerization acceleration step and initiator removal step may be performed before or after the liquid removal step rather than simultaneously with the liquid removal step.

If the porous-insulating-layer liquid composition 7 contains a polymerizable compound, the heating unit 30 may perform, after the liquid removal step, a polymerization completion step of heating the liquid composition layer under reduced pressure. The heater 3a is not particularly limited, as long as the heater 3a satisfies the above-described functions, and examples thereof include, but are not limited to, an IR heater and a hot air heater.

Further, the heating temperature and time can be appropriately selected according to the boiling point of the liquid included in the liquid composition layer and the film thickness to be formed.

FIG. 5 is a schematic diagram illustrating another example of the electrode production apparatus (i.e., liquid discharge device) for achieving the electrode production method of the present embodiment.

A liquid discharge device 300' controls a pump 3101, and valves 311 and 312, and thereby enables a porous-insulating-layer liquid composition to circulate through the liquid discharge head 306, the tank 307, and the tube 308.

The liquid discharge device 300' also includes an external tank 313, and upon decrease in a porous-insulating-layer liquid composition in the tank 307, also enables supply of the porous-insulating-layer liquid composition from the external tank 313 to the tank 307 by controlling the pump 3101, the valves 311, 312, and a valve 314.

When using the electrode production apparatus described above, the porous-insulating-layer liquid composition can be discharged onto a targeted location on the application object.

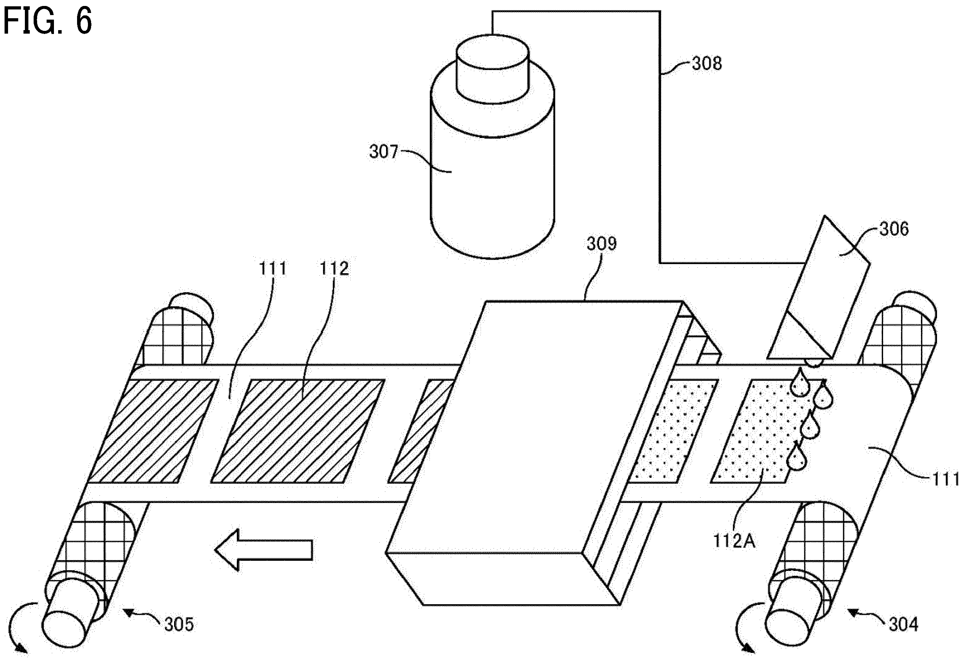

FIG. 6 is a schematic diagram illustrating another example of the electrode production method of the present embodiment.

A method of producing an electrode including a porous insulating layer on a printing base (i.e., an electrode including an electrode mixture layer on a base) includes a step of sequentially discharging the porous-insulating-layer liquid composition 112A onto a printing base 111 by using the liquid discharge device 300.

First, the printing base 111 having an elongated shape is prepared. The printing base 111 is wound around a cylindrical core, and set on a feed roller 304 and a wind-up roller 305 so that the side on which the porous insulating layer is formed faces upward in FIG. 6. Here, the feed roller 304 and the wind-up roller 305 rotate counterclockwise, and the printing base 111 is conveyed from right to left in FIG. 6. Then, droplets of the porous-insulating-layer liquid composition 112A are discharged in the same manner as in FIG. 3 onto the printing base 111 that is sequentially conveyed, from the liquid discharge head 306 installed above the printing base 111 between the feed roller 304 and the wind-up roller 305.

Note that a plurality of liquid discharge heads 306 may be installed in a direction substantially parallel or substantially perpendicular to the conveying direction of the printing base 111. Next, the printing base 111 onto which the droplets of the porous-insulating-layer liquid composition 112A are discharged is conveyed to a heating unit 309 by the feed roller 304 and the wind-up roller 305. As a result, a porous insulating layer 112 is formed, and a laminated structure body in which the porous insulating layer 112 is provided on the printing base 111 is obtained. After that, the laminated structure body is cut into a desired size by punching processing or the like.

The heating unit 309 may be installed either above or below the printing base 111, or a plurality of heating portions may be installed.

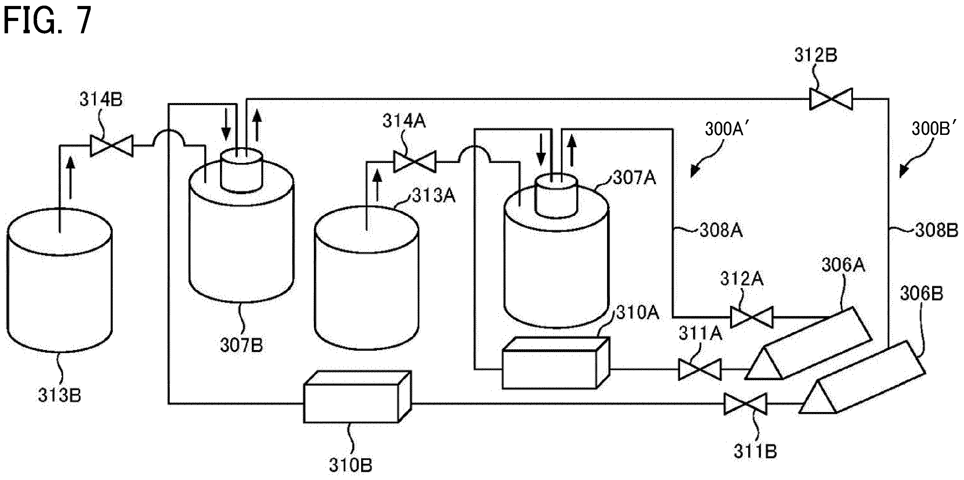

Further, as in FIG. 7, a tank 307A may supply the porous-insulating-layer liquid composition from a tank 313A connected to the tank 307A, and the liquid discharge head 306 may include a plurality of liquid discharge heads 306A and 306B.

[Embodiment in which Liquid Composition Layer or Porous Insulating Layer are Indirectly Formed on Printing Base (Electrode Including Electrode Mixture Layer on Base)]

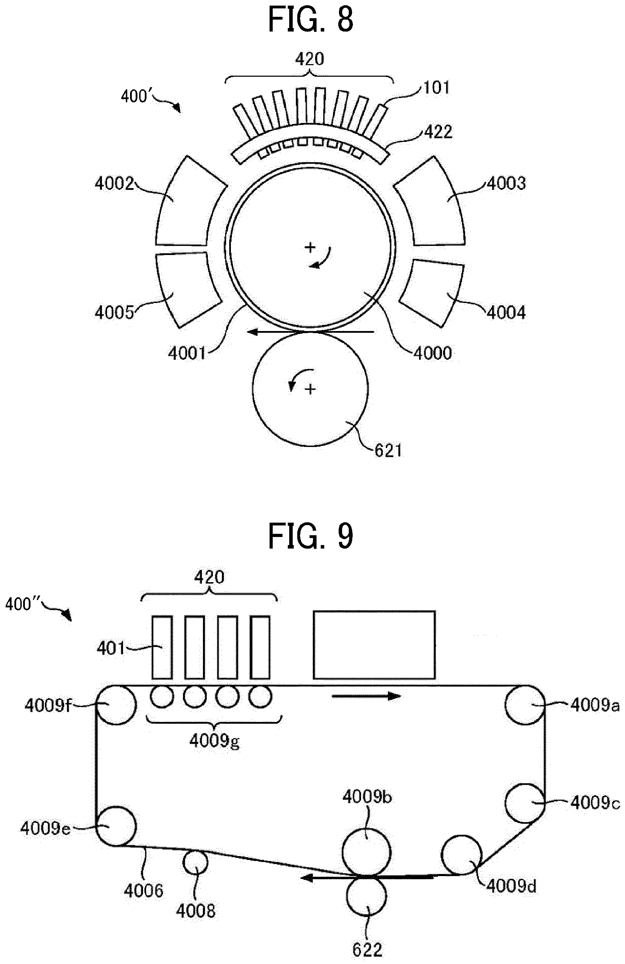

FIG. 8 and FIG. 9 are configuration diagrams illustrating examples of printing units employing an inkjet method and a transfer method as the application units in the electrode production apparatus of the present embodiment. FIG. 8 is a configuration diagram illustrating a printing unit using a drum-shaped intermediate transfer body, and FIG. 9 is a configuration diagram illustrating a printing unit using an endless belt-like intermediate transfer body.

A printing unit 400' illustrated in FIG. 8 is an inkjet printer in which a liquid composition layer or a porous insulating layer are transferred onto a printing base (i.e., an electrode including an electrode mixture layer on a base) via an intermediate transfer body 4001, to form a liquid composition layer or a porous insulating layer on the printing base.

The printing unit 400' includes an inkjet unit 420, a transfer drum 4000, a pretreatment unit 4002, an absorption unit 4003, a heating unit 4004, and a cleaning unit 4005.

The inkjet unit 420 includes a head module 422 holding a plurality of heads 101. Each of the heads 101 discharges a liquid composition onto the intermediate transfer body 4001 supported by the transfer drum 4000 to form a liquid composition layer on the intermediate transfer body 4001. Each of the heads 101 is a line head in which nozzles are arranged in a range covering a width of a recording region of a printing base having the maximum usable size. The heads 101 each include, on a lower surface, a nozzle surface formed with nozzles, and the nozzle surface faces a surface of the intermediate transfer body 4001 with a small gap therebetween. In the present embodiment, the intermediate transfer body 4001 has a configuration to circulate and travel in a circular orbit, and thus, the plurality of heads 101 are arranged radially.

The transfer drum 4000 faces an impression cylinder 621 to form a transfer nip portion. The pretreatment unit 4002 applies a reaction liquid for increasing viscosity of the porous-insulating-layer liquid composition, for example, onto the intermediate transfer body 4001 before discharge of the porous-insulating-layer liquid composition by the heads 101. The absorption unit 4003 absorbs a liquid component from the liquid composition layer on the intermediate transfer body 4001 before transfer. Before the transfer, the heating unit 4004 heats the liquid composition layer on the intermediate transfer body 4001. By heating the liquid composition layer, the liquid contained in the liquid composition layer is removed and the transferability to the printing base is improved. The cleaning unit 4005 cleans an upper face of the intermediate transfer body 4001 after transfer, to remove foreign matter such as ink and dust remaining on the intermediate transfer body 4001.

An outer peripheral surface of the impression cylinder 621 is pressed against the intermediate transfer body 4001, and when the base passes through the transfer nip portion between the impression cylinder 621 and the intermediate transfer body 4001, the porous insulating layer on the intermediate transfer body 4001 is transferred to the printing base. Note that the impression cylinder 621 may include at least one gripping mechanism for holding a distal end portion of the base on the outer peripheral surface of the impression cylinder 621.

A printing unit 400" illustrated in FIG. 9 is an inkjet printer in which a liquid composition layer or a porous insulating layer are transferred onto a printing base (i.e., an electrode including an electrode mixture layer on a base) via an intermediate transfer belt 4006, to form a liquid composition layer or a porous insulating layer on the printing base.

The printing unit 400" discharges porous-insulating-layer liquid composition droplets from the plurality of heads 401 provided in the inkjet unit 420 to form a liquid composition layer or a porous insulating layer on an outer peripheral surface of the intermediate transfer belt 4006. The liquid composition layer or the porous insulating layer formed on the intermediate transfer belt 4006 is formed into a film on the intermediate transfer belt 4006.

In the transfer nip portion where the intermediate transfer belt 4006 faces a transfer roller 622, the liquid composition layer or the porous insulating layer formed into a film on the intermediate transfer belt 4006 is transferred to the printing base.

The post-transfer surface of the intermediate transfer belt 4006 is cleaned with a cleaning roller 4008.

The intermediate transfer belt 4006 is stretched across a drive roller 4009a, an opposing roller 4009b, a plurality of (four in the present example) shape maintaining rollers 4009c, 4009d, 4009e, and 4009f, and a plurality of (four in the present example) support rollers 4009g, and the intermediate transfer belt 4006 moves in a direction of the arrow in FIG. 9. The supporting roller 4009g, which is disposed to face the heads 401, maintains a tensed state of the intermediate transfer belt 4006 when ink droplets are discharged from the heads 401.

<Negative Electrode>

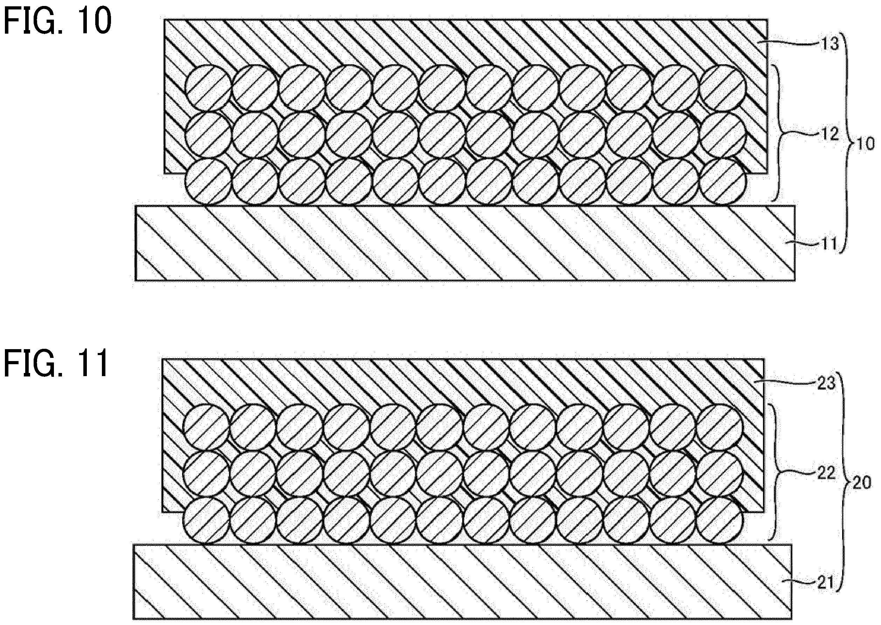

FIG. 10 is a cross-sectional view of a negative electrode of the present embodiment. Referring to FIG. 10, a negative electrode 10 has a structure including a negative electrode base 11, a negative electrode mixture layer 12 formed on the negative electrode base 11, and a porous insulating layer 13 formed on the negative electrode mixture layer 12. The shape of the negative electrode 10 is not particularly limited and can be appropriately selected according to the purpose. For example, a flat-plate shape can be mentioned.

In the negative electrode 10, at least a part of the porous insulating layer 13 is present inside the negative electrode mixture layer 12, and is integrated with the surface of the active material forming the negative electrode mixture layer 12. Here, the integration is not a state in which a member having a film shape or the like is simply laminated as an upper layer on a lower layer, but a state in which a part of the upper layer enters the lower layer, and a surface of a substance forming the upper layer and a surface of a substance forming the lower layer are bonded to each other in a state in which an interface is not clear.

Although the negative electrode mixture layer 12 is schematically illustrated as a structure in which spherical particles are stacked, the particles forming the negative electrode mixture layer 12 may be spherical or non-spherical, and particles having various shapes and various sizes may be mixed.

<Positive Electrode>

FIG. 11 is a cross-sectional view of a positive electrode of the present embodiment. Referring to FIG. 11, a positive electrode 20 has a structure including a positive electrode base 21, a positive electrode mixture layer 22 formed on the positive electrode base 21, and a porous insulating layer 23 formed on the positive electrode mixture layer 22. The shape of the positive electrode 20 is not particularly limited and can be appropriately selected according to the purpose. For example, a flat-plate shape can be mentioned.

In the positive electrode 20, at least a part of the porous insulating layer 23 is present inside the positive electrode mixture layer 22, and is integrated with the surface of the active material forming the positive electrode mixture layer 22.

Although the positive electrode mixture layer 22 is schematically illustrated as a structure in which spherical particles are stacked, the particles forming the positive electrode mixture layer 22 may be spherical or non-spherical, and particles having various shapes and various sizes may be mixed.

(Electrochemical Element)

The electrochemical element of the present disclosure includes the electrode of the present disclosure, and further includes other configurations as necessary.

The electrochemical element may include a positive electrode, a negative electrode, and a solid electrolyte layer or an electrolytic solution, and in addition, a separator and an exterior. At least one of the positive electrode and the negative electrode in the electrochemical element is the electrode of the present disclosure.

Note that the separator is not necessary when using a solid electrolyte or a gel electrolyte.

The electrochemical element may include a current collector. The current collector is the same as the above-described current collector (i.e., electrode base).

The electrochemical element may include an active material, a binder, and a dispersant. The active material, the binder, and the dispersant are the same as the active material, the binder, and the dispersant in the above-described electrode.

Note that the electrochemical element of the present disclosure uses the electrode of the present embodiment. In addition, hereinafter, a lithium ion secondary battery will be described as an example of the electrochemical element, but the present invention is not limited to the following example.

<Electrode>

The electrode other than the above-described electrode of the present embodiment that can be used in the secondary battery is not particularly limited and can be appropriately selected according to the purpose. A known electrode used in the production of a secondary battery can be used. Specifically, it is possible to use an electrode obtained by forming an electrode mixture layer on a current collector and a porous insulating layer on the electrode mixture layer using a known production method.

<Electrolyte>

The electrolyte that can be used in the secondary battery is not particularly limited and can be appropriately selected according to the purpose. A known solid electrolyte or an electrolytic solution used in the production of a secondary battery can be used.

[Electrolytic Solution]

As the electrolytic solution, an organic electrolytic solution in which a supporting electrolyte is dissolved in an organic solvent is usually used. As the supporting electrolyte of the lithium ion secondary battery, for example, a lithium salt is used. Examples of the lithium salt include, but are not limited to, $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, $(C_2F_5SO_2)NLi$. Each of these can be used alone or in combination with others. Among these, in terms of solubility in solvents and exhibiting a high degree of dissociation, $LiPF_6$, $LiClO_4$, and $CF_3SO_3Li$ are preferred, and $LiPF_6$ is more preferred. In general, the lithium ion conductivity tends to increase as a supporting electrolyte having a higher degree of dissociation is used, and thus the lithium ion conductivity can be adjusted by the type of the supporting electrolyte.

The organic solvent used in the electrolytic solution is not particularly limited and can be appropriately selected according to the purpose, as long as it can dissolve the supporting electrolyte. Examples of the organic solvent include, but are not limited to, carbonates such as dimethyl carbonate (DMC), ethylene carbonate (EC), diethyl carbonate (DEC), propylene carbonate (PC), butylene carbonate (BC), ethyl methyl carbonate (EMC); esters such as γ-butyrolactone and methyl formate; ethers such as 1,2-dimethoxyethane and tetrahydrofuran; sulfur-containing compounds such as sulfolane and dimethyl sulfoxide. Each of these can be used alone or in combination with others. Among these, carbonates are preferable, and a mixture of ethylene carbonate and diethyl carbonate is more preferable, because they have high permittivity and a wide stable potential region.

The concentration of the electrolyte in the electrolytic solution can be appropriately adjusted as necessary. Further, a known additive such as vinylene carbonate may be added to the electrolytic solution.

<Separator>

The electrochemical element may include a separator in addition to the porous insulating layer. The separator is an insulating layer having ion permeability and no electron conductivity. The material, shape, size, and structure of the separator are not particularly limited and can be appropriately selected corresponding to the purpose. The size of the separator is not limited as long as the separator can be used in the electrochemical element, and the separator may cover the periphery of the electrode in addition to the space between the electrodes, if necessary.

Examples of the separator include, but are not limited to, paper such as kraft paper, vinylon mixed paper, or synthetic pulp mixed paper, cellophane, a polyethylene graft film, polyolefin non-woven fabric such as polypropylene melt-blown non-woven fabric, polyamide non-woven fabric, glass fiber non-woven fabric, and a micropore film. The structure of the separator may be a single-layer structure or a laminated structure.

<Exterior>

There is no particular limitation to an exterior as long as the exterior can seal the electrode, the electrolyte, the separator, or the solid electrolyte or the gel electrolyte.

<Electrochemical Element Production Apparatus and Electrochemical Element Production Method>

The electrochemical element production apparatus of the present embodiment includes an electrode production unit that produces an electrode by the above-described electrode production apparatus of the present disclosure, and further includes other configurations as necessary.

The electrochemical element production method of the present embodiment includes a step of producing an electrode by the above-described electrode production method of the present disclosure, and further includes other configurations as necessary.

As the electrochemical element production apparatus and the electrochemical element production method of the present embodiment, known means and methods can be appropriately selected, except that the above-described electrode production unit and the step of producing an electrode are those of the present disclosure.

The electrochemical element of the present embodiment can be produced, for example, by stacking a positive electrode and a negative electrode, if necessary, with a separator interposed therebetween, rolling or folding the stack according to the battery shape as needed, placing the stack in a battery container, injecting an electrolytic solution into the battery container, and sealing the battery container.

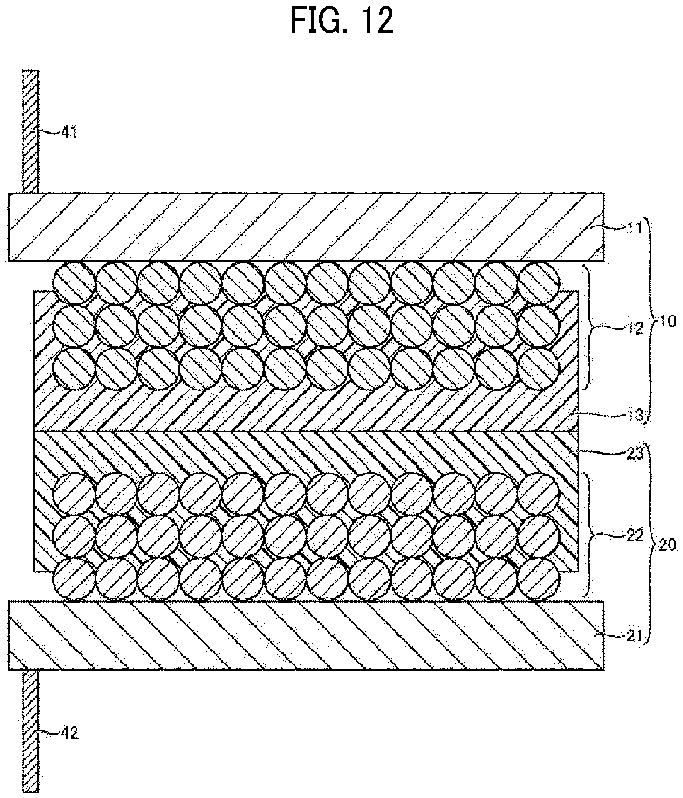

FIG. 12 is a cross-sectional view of an electrode element used in the electrochemical element of the present embodiment. Referring to FIG. 12, the electrode element has a structure in which the negative electrode 10 and the positive electrode 20 are stacked with the negative electrode base 11 and the positive electrode base 21 facing outward. A negative electrode lead wire 41 is connected to the negative electrode base 11. A positive electrode lead wire 42 is connected to the positive electrode base 21.

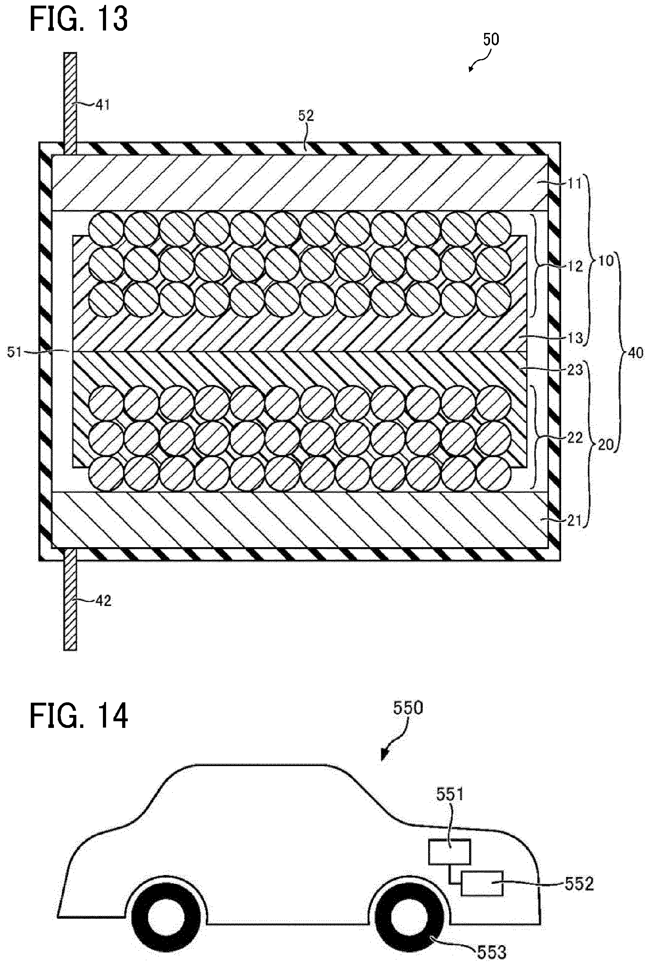

FIG. 13 is a cross-sectional view of the electrochemical element of the present embodiment. Referring to FIG. 13, the electrochemical element has a structure in which a non-aqueous electrolytic solution is injected into an electrode element 40 to form an electrolyte layer 51 and sealed with an exterior 52. In the electrochemical element, the negative electrode lead wire 41 and the positive electrode lead wire 42 are led out of the exterior 52. The electrochemical element may include other members as necessary.

The electrochemical element is not particularly limited and can be appropriately selected according to the purpose. Examples of the electrochemical element include, but are not limited to, a non-aqueous electrolytic solution secondary battery and a non-aqueous electrolytic solution capacitor.

The shape of the electrochemical element is not particularly limited and can be appropriately selected from various commonly used shapes according to the usage of the electrochemical element. Examples of the shape include, but are not limited to, a laminate type, a cylinder type in which a sheet electrode and a separator are spirally formed, a cylinder type with an inside-out structure in which a pellet electrode and a separator are combined, and a coin type in which a pellet electrode and a separator are laminated.

<Usage of Electrochemical Element>

There is no particular limitation to usage of the electrochemical element. Examples of the usage include, but are not limited to, a moving object such as a vehicle; and an electric device such as a smartphone, a laptop computer, a pen-input personal computer, a mobile personal computer, an e-book player, a cell phone, a portable fax machine, a portable copying machine, a portable printer, a stereo headphone, a video camera, a liquid crystal television, a handheld vacuum cleaner, a portable CD player, a MiniDisc player, a transceiver, an electronic diary, a calculator, a memory card, a portable tape recorder, a radio, a backup power supply, a motor, a lighting device, a toy, a game console, a clock/watch, an electronic flash, or a camera. Among these products, a vehicle and an electrical device are particularly preferable.

Examples of the moving object include, but are not limited to, an ordinary automobile, a large-sized special automobile, a small-sized special automobile, a truck, a large-sized motorcycle, and an ordinary motorcycle.

[Moving object]

FIG. 14 is a diagram illustrating a moving object equipped with an all-solid-state battery, which is an example of the electrochemical element of the present embodiment. A moving object 550 is, for example, an electric vehicle. The moving object 550 includes a motor 551, an electrochemical element 552, and wheels 553 as moving means. The electrochemical element 552 is the above-described electrochemical element of the present embodiment. The electrochemical element 552 drives the motor 551 by supplying electric power to the motor 551. The motor 551 thus driven can drive the wheels 553 and, as a result, the moving object 550 can move.

According to the above-described configuration, the moving object is driven by electric power from the electrochemical element excellent in compression resistant strength and capacity retention rate, allowing the moving object to move safely and efficiently.

The moving object 550 is not limited to an electric vehicle and may be a plug-in hybrid vehicle (PHEV), a hybrid vehicle (HEV), a locomotive that can run using both a diesel engine and the electrochemical element, or a motorcycle. In addition, the moving object may be a carrier robot used in a factory or the like, which can move by using only the electrochemical element or by using both an engine and the electrochemical element.

Further, the moving object may be the one that does not move as a whole, but only a part of which moves. For example, the moving object may be an assembly robot that can move an arm or the like by using only the electrochemical element or both an engine and the electrochemical element, which is installed on the production line of a factory.

[Examples]

Examples of the present disclosure will be described below. However, the present disclosure is not limited to these examples.

(Preparation Example 1)

<Preparation of Porous-insulating-layer Liquid Composition 1>

First, 380 parts by mass of 2-ethylhexanol as a solvent and 20 parts by mass of MALIALIM AAB-0851 (manufactured by NOF CORPORATION) as a dispersant were placed in a glass vessel, and 400 parts by mass of AKP-30 (manufactured by Sumitomo Chemical Co., Ltd.) as an alumina powder was added while stirring. After thorough stirring, 960 parts by mass of zirconia beads having a diameter of 5 mm were added, and a dispersion treatment was carried out for 96 hours in a ball mill at a rotation speed of 35 rpm to obtain an inorganic oxide particle dispersion liquid with 50% solid content of inorganic oxide particles.

Next, 39 parts by mass of 2-ethylhexanol as a porogen, 40 parts by mass of trimethylolpropane ethoxy triacrylate as a monomer, and 1.0 parts by mass of IRGACURE 184 (manufactured by BASF) as a polymerization initiator were added in another glass vessel, and mixed to obtain a base liquid.

While the obtained base liquid was stirred, 20 parts by mass of the inorganic oxide particle dispersion liquid was added thereto little by little, and after stirring, coarse particles were removed with a membrane filter having an average pore diameter of 5 μm to prepare the porous-insulating-layer liquid composition 1.

(Preparation Examples 2 to 20)

<Preparation of Porous-insulating-layer Liquid Compositions 2 to 20>

The porous-insulating-layer liquid compositions 2 to 20 were prepared in the same manner as in Preparation Example 1 except that the compositions in Preparation Example 1 were changed as illustrated in Table 1-1 to Table 1-3.

Table 1-1

| | | Liquid composition for forming porous insulating layer No. | | | | | | | |
|---|---|---|---|---|---|---|---|---|---|
| | | 1 | 2 | 3 | 4 | 5 | 6 | 7 | 8 |
| Inorganic oxide particle | AKP-30 | 10 | | | | 0.3 | 0.6 | 1.2 | 17 |
| | AA-03 | | 10 | | | | | | |
| | LS-711C | | | 10 | | | | | |
| | AA-05 | | | | 10 | | | | |
| | AKP-3000 | | | | | | | | |
| | AA-07 | | | | | | | | |
| | SERATH02025 | | | | | | | | |
| Solvent | 2-ethylhexanol | 48.8 | 48.8 | 48.8 | 48.8 | 58.7 | 58.4 | 57.8 | 41.7 |
| Dispersant | MALIALIM AAB-0851 | 0.2 | 0.2 | 0.2 | 0.2 | 0.01 | 0.01 | 0.01 | 0.34 |
| | MALIALIM SC-0708A | | | | | | | | |
| | MALIALIM AKM-0531 | | | | | | | | |
| Monomer | Trimethylolpropane ethoxy triacrylate | 40 | 40 | 40 | 40 | 40 | 40 | 40 | 40 |
| Polymerization initiator | Irgacure184 | 1 | 1 | 1 | 1 | 1 | 1 | 1 | 1 |
| Total (mass %) | | 100 | 100 | 100 | 100 | 100 | 100 | 100 | 100 |

Table 1-2

| | | Liquid composition for forming porous insulating layer No. | | | | | | | |
|---|---|---|---|---|---|---|---|---|---|
| | | 9 | 10 | 11 | 12 | 13 | 14 | 15 | 16 |
| Inorganic oxide particle | AKP-30 | 22 | 26 | | | | 10 | 12.5 | 11.2 |
| | AA-03 | | | | | | | | |
| | LS-711C | | | | | | | | |
| | AA-05 | | | | | | | | |
| | AKP-3000 | | | 10 | | | | | |
| | AA-07 | | | | 10 | | | | |
| | SERATH02025 | | | | | 10 | | | |

(continued)

| | | Liquid composition for forming porous insulating layer No. | | | | | | | |
|---|---|---|---|---|---|---|---|---|---|
| | | 9 | 10 | 11 | 12 | 13 | 14 | 15 | 16 |
| Solvent | 2-ethylhexanol | 36.6 | 32.5 | 48.8 | 48.8 | 48.8 | 49.0 | 36.3 | 42.6 |
| Dispersant | MALIALIM AAB-0851 | 0.44 | 0.52 | | | | | | |
| | MALIALIM SC-0708A | | | 0.2 | | | | | |
| | MALIALIM AKM-0531 | | | | 0.2 | 0.2 | 0.05 | 0.2 | 0.2 |
| Monomer | Trimethylolpropane ethoxy triacrylate | 40 | 40 | 40 | 40 | 40 | 40 | 50 | 45 |
| Polymerization initiator | Irgacure184 | 1 | 1 | 1 | 1 | 1 | 1 | 1 | 1 |
| Total (mass %) | | 100 | 100 | 100 | 100 | 100 | 100 | 100 | 100 |

Table 1-3

| | | Liquid composition for forming porous insulating layer No. | | | |
|---|---|---|---|---|---|
| | | 17 | 18 | 19 | 20 |
| Inorganic oxide particle | AKP-30 | 8.8 | 7.5 | 0 | 30 |
| | AA-03 | | | | |
| | LS-711C | | | | |
| | AA-05 | | | | |
| | AKP-3000 | | | | |
| | AA-07 | | | | |
| | SERATH02025 | | | | |
| Solvent | 2-ethylhexanol | 55.0 | 61.3 | 59.0 | 28.4 |
| Dispersant | MALIALIM AAB-0851 | | | | 0.6 |
| | MALIALIM SC-0708A | | | | |
| | MALIALIM AKM-0531 | 0.2 | 0.2 | | |
| Monomer | Trimethylolpropane ethoxy triacrylate | 35 | 30 | 40 | 40 |
| Polymerization initiator | Irgacure184 | 1 | 1 | 1 | 1 |
| Total (mass %) | | 100 | 100 | 100 | 100 |

The details of the inorganic oxide particles and the dispersant in Table 1-1 to Table 1-3 are as follows.

- Inorganic Oxide Particles-

· AKP-30, manufactured by Sumitomo Chemical Co., Ltd., irregularly shaped alumina particles

· AA-03, manufactured by Sumitomo Chemical Co., Ltd., spherical alumina particles

· LS-711C, manufactured by Nippon Light Metal Co., Ltd., irregularly shaped alumina particles

· AA-05, manufactured by Sumitomo Chemical Co., Ltd., spherical alumina particles

· AKP-3000, manufactured by Sumitomo Chemical Co., Ltd., irregularly shaped alumina particles

· AA-07, manufactured by Sumitomo Chemical Co., Ltd., spherical alumina particles

· SERATH02025, manufactured by KINSEI MATEC CO., LTD., Plate -like alumina particles

- Dispersant-

· MALIALIM AAB-0851 manufactured by NOF CORPORATION

· MALIALIM SC-0708A manufactured by NOF CORPORATION

· MALIALIM AKM-0531 manufactured by NOF CORPORATION

(Example 1)

<Preparation of Electrochemical Element>

-Preparation of Negative Electrode-

A slurry for a negative electrode mixture layer, which was obtained by kneading a negative electrode active material (SCMG-XRs, manufactured by Showa Denko K.K.), water, and polyvinylidene fluoride (Soref 5130, manufactured by Solvay Co., Ltd.), was applied to both surfaces of a copper foil as a negative electrode base using a comma coater of a two-roll direct coating system, and then dried to form a negative electrode mixture layer. Thereafter, using an air-hydro-type 10-ton roll press apparatus, a pressure of 10,000 kg was applied to the negative electrode mixture layer with a roller of 250 mm Φ, thereby producing a negative electrode.

-Preparation of Positive Electrode-

A slurry for a positive electrode mixture layer, which was obtained by kneading a positive electrode active material (lithium nickelate 503H, manufactured by JFE Mineral & Alloy Company, Ltd.), N-methylpyrrolidone, and polyvinylidene fluoride (Soref 5130, manufactured by Solvay Co., Ltd.), was applied to both surfaces of an aluminum foil as a positive electrode base using a comma coater of a two-roll direct coating system, and then dried to form a positive electrode mixture layer. Thereafter, using an air-hydro-type 10-ton roll press apparatus, a pressure of 10,000 kg was applied to the positive electrode mixture layer with a roller of 250 mm Φ, thereby producing a positive electrode.

-Formation of Porous Insulating Layer-

The porous-insulating-layer liquid composition 1 was discharged onto the negative electrode mixture layer of the negative electrode using a liquid discharge device (EV2500, manufactured by Ricoh Co., Ltd.) and a liquid discharge head (MH5421F, manufactured by Ricoh Co., Ltd.). At this time, in order to suppress excessive permeation, the negative electrode mixture layer was wetted with 2-ethylhexanol as a porogen immediately before the discharge. Thereafter, the porous-insulating-layer liquid composition 1 was discharged onto the swollen negative electrode mixture layer. Within 10 seconds from the discharge, a monomer as a polymerizable compound was polymerized by ultraviolet irradiation under a nitrogen atmosphere, and the porogen was removed by heating on a hot plate at 120 °C for 1 minute from a side opposite to the discharge surface, thereby producing a negative electrode in which a porous insulating layer was formed on a negative electrode mixture layer of Example 1.

(Examples 2 to 14)

As illustrated in Table 2-1 and Table 2-2, negative electrodes in which a porous insulating layer was formed on a negative electrode mixture layer of Examples 2 to 14 were produced in the same manner as in Example 1, except that the porous-insulating-layer liquid composition 1 was replaced with the porous-insulating-layer liquid compositions 2 to 14 in Example 1.

(Examples 15 to 18)

In the same manner as in Example 1 except that the discharge amount of the porous-insulating-layer liquid composition 1 from the liquid discharge head was adjusted in Example 1 and the average thickness of the porous insulating layer was changed as illustrated in Table 2-1 and Table 2-2, negative electrodes in which a porous insulating layer was formed on a negative electrode mixture layer of Examples 15 to 18 were produced.

(Examples 19 to 22)

Negative electrodes in which a porous insulating layer formed on a negative electrode mixture layer of Examples 19 to 22 were produced in the same manner as in Example 1, except that the porous-insulating-layer liquid composition 1 was replaced with porous-insulating-layer liquid compositions 15 to 18 in Example 1.

(Example 23)

In Example 1, the porous-insulating-layer liquid composition 1 was replaced with porous-insulating-layer liquid compositions 16 and 17, and the discharge was performed.
The porous-insulating-layer liquid composition 16 was discharged onto the negative electrode mixture layer so that the average thickness after drying was 10 $\mu$m, and within 10 seconds from the discharge, the monomer was polymerized by ultraviolet irradiation under a nitrogen atmosphere to form a first porous insulating layer.
Further, the porous-insulating-layer liquid composition 17 was discharged onto the first porous insulating layer so that the average thickness after drying was 10 $\mu$m, and was subjected to ultraviolet irradiation in the same manner to form a second porous insulating layer.
Thereafter, the porogen was removed by heating on a hot plate at 120 °C for 1 minute from the side opposite to the discharge surface, thereby producing a negative electrode in which a porous insulating layer was formed on a negative electrode mixture layer of Example 23.

(Example 24)

A negative electrode in which a porous insulating layer was formed on a negative electrode mixture layer of Example 24 was produced in the same manner as in Example 23, except that the order of discharging the porous-insulating-layer liquid compositions 16 and 17 was changed in Example 23.

(Example 25)

A negative electrode in which a porous insulating layer was formed on a negative electrode mixture layer of Example 25 was produced in the same manner as in Example 23, except that the porous-insulating-layer liquid composition 16 was replaced with the porous-insulating-layer liquid composition 7, and furthermore, the porous-insulating-layer liquid composition 17 was replaced with the porous-insulating-layer liquid composition 1 in Example 23.

(Example 26)

A negative electrode in which a porous insulating layer was formed on a negative electrode mixture layer of Example 26 was produced in the same manner as in Example 25 except that the order of discharging the porous-insulating-layer liquid compositions 7 and 1 was changed in Example 25.

(Comparative Examples 1 and 2)

Negative electrodes in which a porous insulating layer was formed on a negative electrode mixture layer of Comparative Examples 1 and 2 were produced in the same manner as in Example 1 except that the porous-insulating-layer liquid composition 1 was replaced with porous-insulating-layer liquid compositions 19 and 20 in Example 1.

<Preparation of Test Piece>

Next, with respect to Examples 1 to 26 and Comparative Examples 1 and 2, test pieces were prepared by forming a porous insulating layer on one side of a copper foil as a negative electrode base under the same conditions as in the preparation of the negative electrode, and the average primary particle size of the inorganic oxide particles in the porous insulating layer, the average dispersed particle size of the inorganic oxide particles in the porous insulating layer, the average thickness of the porous insulating layer, the average porosity of the porous insulating layer and the distribution thereof, and the area ratio of the inorganic oxide particles in the porous insulating layer and the distribution thereof were measured as follows. The results are presented in Table 2-1 and Table 2-2.

<Average Primary Particle Size of Inorganic Oxide Particles in Porous Insulating Layer>

The average primary particle size of the inorganic oxide particles in the porous insulating layer was measured from a cross-sectional observation image of each test piece.

The electrode (the test piece) in which a porous insulating layer was formed was cut into 5 mm squares, and was impregnated in a liquid obtained by mixing a two-component epoxy resin (epoxy resin 53 model for embedding, manufactured by Sankei Co., Ltd.) and then vacuum-defoaming the mixture. The electrode permeated with the epoxy resin was sandwiched between smooth polytetrafluoroethylene plates and cured in a thermostatic bath at 40 °C for 12 hours. After the epoxy resin is cured, the electrode was fixed on a glass plate with a masking tape, and a blade of a 76 razor (manufactured by Nisshin EM Co., Ltd.) was vertically pressed against a surface on a side opposite to the porous insulating layer whose cross section was to be observed to cut the electrode. Further, the cross section of the cut sample was subjected to finish processing using a cross-section polisher (SM-09010, manufactured by JEOL Ltd.) under the conditions of an acceleration voltage of 5.0 kV, a beam current of 120 $\mu$A, and a processing time of 180 minutes.

The cross section was photographed using a scanning electron microscopy (SEM) (Merlin, manufactured by Carl Zeiss AG) under the conditions of TLD, a reflected electron composition image, a magnification of 2500 times, a WD of 5.0 mm, an accelerating voltage of 2.0 kV, and a view field width of 50.8 $\mu$m.

The photographed image was output as a TIFF image, the number of pixels of the length of the major axis of a single particle in the view field was measured using image processing software Image J (open source software), and primary particles were calculated from the size per pixel. Fifty particles (or all particles if less) within the view field range were measured, and the average value of the results excluding the top 3% or more and the bottom 3% or less was taken as the measured value.

<Average Dispersed Particle Size of Inorganic Oxide Particles in Porous Insulating Layer>

The average dispersed particle size of the inorganic oxide particles in the porous insulating layer was measured from a cross-sectional observation image of each test piece.

For the average dispersed particle size of the inorganic oxide particles in the porous insulating layer, a cross section of the porous insulating layer was photographed in the same way as for the average primary particle size of the inorganic oxide particles in the porous insulating layer, the photographed image was output as a TIFF image and imported into the image processing software Image J (open source software), 8 bits was selected from Type in the menu of Image J, and Threshold was selected from Adjust in the menu of Image J, the minimum value in 256 gradations was set to 100 and the maximum value was set to 255, and binarization was performed, thereby creating an image in which only the dispersed inorganic oxide particles were extracted. An area S ($px^2$) of each dispersed inorganic oxide particle was calculated by selecting Analyze Particles in the Analyze menu. The length per pixel of the image was defined as A (nm/px), the cross section of the dispersed inorganic oxide particles was regarded as a circle, and the average dispersed particle size of the inorganic oxide particles was obtained by the following calculation formula.

$$\text{Average dispersed particle size (nm)} = 2A \, (S/\pi)^{(1/2)}$$

In addition, fifty particles (or all particles if less) within the view field range were measured, and the average value of the results excluding the top 3% or more and the bottom 3% or less was taken as the measured value.

<Measurement of Average Thickness of Porous Insulating Layer>

The average thickness of the porous insulating layer was measured from a cross-sectional observation image of each test piece.

For the average thickness of the porous insulating layer, a cross section of the porous insulating layer was photographed in the same way as for the average primary particle size of the inorganic oxide particles in the porous insulating layer, the photographed image was output as a TIFF image, an area of the porous insulating layer portion was calculated from the brightness difference of the image by using image editing software GIMP 2.10.32 (GNU GPL), and the thickness was calculated by dividing the area by the number of pixels in the direction perpendicular to the film thickness. The average value of the calculation results of five images in different visual field ranges was taken as the measurement value.

<Measurement of Average Porosity and its Distribution of Porous Insulating Layer>

The average porosity and its distribution of the porous insulating layer were measured from a cross-sectional observation image of each test piece.

For the average porosity of the porous insulating layer, a cross section of the porous insulating layer was photographed in the same way as for the average primary particle size of the inorganic oxide particles in the porous insulating layer, the photographed image was output as a TIFF image, and the average porosity, which is the proportion of the void portion in the porous insulating layer, was calculated from the contrast of the image of the resin backbone portion and void portion by using image editing software GIMP 2.10.32 (GNU GPL).

On an operation screen of the GIMP, a range was selected so as to entirely include the porous insulating layer in the thickness direction, the brightness was converted into a histogram, the minimum value in 256 gradations was set to 0, the maximum value was set to 70 (threshold value), the proportion of the number of pixels of the corresponding brightness was calculated as a percent, and the average value of the calculation results of five images in different visual field ranges was taken as the measurement value.

Next, as illustrated in FIG. 2, for the distribution of the average porosity in the porous insulating layer, with respect to the thickness of the porous insulating layer, a boundary portion where the proportion of the porous insulating layer is 50% or more in the boundary region between the porous insulating layer and the electrode mixture layer is defined as 0, the farthest position of the surface of the porous insulating layer viewed from the electrode base is defined as 100, and when a region from 0 to 100 is divided into two regions, a measurement region 1, which is included in a region from 0 to 50 and has the same length as the thickness of the porous insulating layer in the planar direction, is compared with a measurement region 2, which is included in a region from 50 to 100 and has the same length as the thickness of the porous insulating layer in the planar direction, an average porosity in a range of 10% of the thickness of the porous insulating layer from the electrode mixture layer and an average porosity in a range of 10% of the thickness of the porous insulating layer from the side opposite to the electrode mixture layer were determined and the difference between the two average porosities was calculated.

<Measurement of Area Ratio and its Distribution of Inorganic Oxide Particles in Porous Insulating Layer>

The area ratio and its distribution of the inorganic oxide particles in the porous insulating layer were measured from a cross-sectional observation image of each test piece.

For the area ratio of the inorganic oxide particles in the porous insulating layer, a cross section of the porous insulating layer was photographed in the same way as for the average primary particle size of the inorganic oxide particles in the porous insulating layer, the photographed image was output as a TIFF image. By using image editing software GIMP 2.10.32 (GNU GPL), the image was divided into two in the thickness direction of the porous insulating layer, and the area ratio of the inorganic oxide particles contained in each resin backbone was measured.

On an operation screen of the GIMP, a range to be measured was selected, and the brightness was converted into a histogram. The minimum value (threshold value) in 256 gradations was set to 100, the maximum value was set to 255, the proportion of the number of pixels of the corresponding brightness was calculated as a percent, and the average value of the calculation results of five images in different visual field ranges was taken as the measurement value.

Next, for the distribution of the area ratio of the inorganic oxide particles in the porous insulating layer, as illustrated in FIG. 2, with respect to the thickness of the porous insulating layer, a boundary portion where the proportion of the porous insulating layer is 50% or more in the boundary region between the porous insulating layer and the electrode mixture layer is defined as 0, the farthest position of the surface of the porous insulating layer viewed from the electrode base is defined as 100, and when a region from 0 to 100 is divided into two regions, a measurement region 1, which is included in a region from 0 to 50 and has the same length as the thickness of the porous insulating layer in the planar direction, is compared with a measurement region 2, which is included in a region from 50 to 100 and has the same length as the thickness of the porous insulating layer in the planar direction, an area ratio of the inorganic oxide in a range of 10% of the thickness of the porous insulating layer from the electrode mixture layer and an area ratio (content) of the inorganic oxide in a range of 10% of the thickness of the porous insulating layer from the side opposite to the electrode mixture layer were determined and the difference between the two area ratios was calculated.

Next, the compression-resistance property of the porous insulating layer and the capacity retention rate, which is the cycle life of the electrochemical element, were evaluated as follows. The results are presented in Table 2-2.

<Evaluation of Compression-Resistance Property of Porous Insulating Layer>

Under the same conditions as in the preparation of the negative electrodes of Examples 1 to 26 and Comparative Examples 1 and 2, a copper foil having a porous insulating layer formed on one surface thereof was cut into 25 mm × 25 mm pieces, and 15 sheets were stacked and fixed at four sides with tape to prepare a test piece.

A stainless steel disc (1 mm in thickness, 201 mm$^2$ in area) was overlapped on the test piece, and a load was applied to the test piece using a desktop universal mechanical testing machine (manufactured by Shimadzu Corporation, desktop precision universal testing machine AGS-X) and a compression tool. Compression was gradually started at a rate of 0.1 mm/min, and a point at which the load reached 0.5 MPa was set as a recording start point. After reaching the start point, the load was maintained at 1.0 MPa, and in this state, changes in the thicknesses were recorded for 60 minutes. The thickness when a load was applied to the copper foil by the same method was used as a baseline, and the change in the thickness of the test piece in which the porous insulating layer was formed was defined as the compression displacement (%) [(thickness after compression/thickness before compression) $\times$ 100]. The measurement was performed three times or more per condition, and the average value was evaluated as the compression-resistance property according to the following criteria. In addition, the smaller the value of the compression displacement, the more excellent the compression-resistance property, and in the evaluation, "A" indicates the most excellent result, and "A" to "C" were regarded as acceptable.

[Evaluation Criteria]

A: Compression displacement less than 1.0%
B: Compression displacement 1.0% or more and less than 3.0%
C: Compression displacement 3.0% or more and less than 5.0%
D: Compression displacement 5.0% or more

<Preparation of Lithium Ion Secondary Battery>

Under the same conditions as in the preparation of the negative electrodes of Examples 1 to 26 and Comparative Examples 1 and 2, a porous insulating layer was formed on one side of the electrode mixture layer of the negative electrode, then the negative electrode was cut to 50 mm $\times$ 30 mm (excluding the lead wire). An electrode element was obtained by stacking a positive electrode which is cut to 47 mm $\times$ 27 mm (excluding the lead wire) and the negative electrode so that the respective lead wires are not short-circuited (see FIG. 12).

The obtained electrode element was sandwiched between aluminum laminate sheets, and then the periphery was sealed with a laminator except for a liquid injection port to form a bag-like exterior. LBG-00015 (manufactured by Kishida Chemical Co., Ltd.) as a non-aqueous electrolytic solution was injected into the exterior, and then the liquid injection port portion was sealed with a degassing sealer to produce an electrochemical element illustrated in FIG. 13.

<Measurement of Initial Element Capacity>

The positive electrode lead wire and the negative electrode lead wire of each of the produced electrochemical elements were connected to a charge/discharge test device manufactured by Hokuto Denko Co., Ltd. and subjected to constant-current and constant-voltage charge at the maximum voltage of 4.2 V and a current rate of 0.2 C for 5 hours. After charging was completed, each of the produced electrochemical elements was placed in a constant temperature bath at 40°C for 5 days. Then, constant-current discharge was performed to 2.5V at the current rate of 0.2 C. After that, the constant-current and constant-voltage charge was performed at the maximum voltage of 4.2 V and the current rate of 0.2 C for 5 hours, followed by a 10-minute rest period, and the constant-current discharge was performed to 2.5 V at the current rate of 0.2 C. The discharge capacity at this point was defined as the initial element capacity.

<Evaluation of Cycle Capacity Retention Rate>

The life of the electrochemical element during repeated charging was evaluated by the cycle capacity retention rate. The positive electrode lead wire and the negative electrode lead wire of the electrochemical element for which the initial element capacity was measured as described above were connected to the charge/discharge test device manufactured by Hokuto Denko Co., Ltd. and subjected to constant-current and constant-voltage charge at the maximum voltage of 4.2 V and a current rate of 1 C for 3 hours. After charging was completed, the constant-current discharge was performed to 2.5 V at the current rate of 1 C. After a 10-minute rest period, this was repeated for 1,000 cycles. After completion of 1,000 cycles, the constant-current and constant-voltage charge was performed at the maximum voltage of 4.2 V and the current rate of 0.2 C for 5 hours, followed by a 10-minute rest period, and the constant-current discharge was performed to 2.5 V at the current rate of 0.2 C.

The discharge capacity at this point was defined as the discharge capacity after the cycle, and the cycle capacity retention rate (discharge capacity after the cycle/initial discharge capacity $\times$ 100) was calculated and evaluated according to the following criteria. In the evaluation, "A" indicates the most excellent result, and "C" or higher is acceptable.

[Evaluation Criteria]

A: Cycle capacity retention rate 80% or more
B: Cycle capacity retention rate 70% or more and less than 80%
C: Cycle capacity retention rate 60% or more and less than 70%
D: Cycle capacity retention rate less than 60%

Table 2-1

| | Liquid composition for forming porous insulating film No. | Area ratio of inorganic oxide particles | Distribution of area ratio of inorganic oxide particles | | | Average porosity | Distribution of average porosity | | |
|---|---|---|---|---|---|---|---|---|---|
| | | | Electrode mixture layer side 10% | Opposite side 10% | Difference | | Electrode mixture layer side 10% | Opposite side 10% | Difference |
| | | Area% | Area% | Area% | Area% | % | % | % | % |
| Example 1 | 1 | 3.3 | 3.3 | 3.3 | 0.0 | 53 | 53 | 53 | 0 |
| Example 2 | 2 | 3.3 | 3.2 | 3.5 | -0.3 | 52 | 50 | 51 | -1 |
| Example 3 | 3 | 3.3 | 3.1 | 3.4 | -0.3 | 52 | 52 | 52 | 0 |
| Example 4 | 4 | 3.3 | 4.1 | 2.8 | 1.3 | 52 | 48 | 52 | -4 |
| Example 5 | 5 | 0.1 | 0.1 | 0.1 | 0.0 | 58 | 57 | 55 | 2 |
| Example 6 | 6 | 0.2 | 0.2 | 0.2 | 0.0 | 55 | 55 | 55 | 0 |
| Example 7 | 7 | 0.4 | 0.4 | 0.4 | 0.0 | 52 | 50 | 53 | -3 |
| Example 8 | 8 | 5.9 | 6.0 | 6.0 | 0.0 | 52 | 52 | 52 | 0 |
| Example 9 | 9 | 8.0 | 8.0 | 8.0 | 0.0 | 48 | 40 | 48 | -8 |
| Example 10 | 10 | 9.8 | 9.8 | 9.8 | 0.0 | 45 | 37 | 45 | -8 |
| Example 11 | 11 | 3.3 | 3.2 | 3.6 | -0.4 | 50 | 50 | 50 | 0 |
| Example 12 | 12 | 3.3 | 3.9 | 3.1 | 0.8 | 43 | 43 | 43 | 0 |
| Example 13 | 13 | 3.3 | 4.6 | 3.2 | 1.4 | 40 | 40 | 40 | 0 |
| Example 14 | 14 | 3.3 | 4.2 | 3.8 | 0.4 | 39 | 39 | 39 | 0 |
| Example 15 | 1 | 3.3 | 3.6 | 2.7 | 0.9 | 53 | 50 | 55 | -5 |
| Example 16 | 1 | 3.3 | 3.5 | 3.2 | 0.3 | 53 | 52 | 54 | -2 |
| Example 17 | 1 | 3.3 | 3.3 | 3.3 | 0.0 | 53 | 53 | 53 | 0 |
| Example 18 | 1 | 3.3 | 3.3 | 3.3 | 0.0 | 53 | 54 | 53 | 1 |
| Example 19 | 15 | 4.4 | 4.4 | 4.4 | 0.0 | 25 | 25 | 26 | -1 |
| Example 20 | 16 | 4.0 | 4.0 | 4.0 | 0.0 | 35 | 35 | 35 | 0 |
| Example 21 | 17 | 3.0 | 3.0 | 3.0 | 0.0 | 55 | 56 | 55 | 1 |

| | Liquid composition for forming porous insulating film No. | Area ratio of inorganic oxide particles | Distribution of area ratio of inorganic oxide particles | | | Average porosity | Distribution of average porosity | | |
|---|---|---|---|---|---|---|---|---|---|
| | | | Electrode mixture layer side 10% | Opposite side 10% | Difference | | Electrode mixture layer side 10% | Opposite side 10% | Difference |
| | | Area% | Area% | Area% | Area% | % | % | % | % |
| Example 22 | 18 | 2.6 | 2.6 | 2.6 | 0.0 | 63 | 64 | 62 | 2 |
| Example 23 | 16, 17 | 3.3 | 3.3 | 3.3 | 0.0 | 45 | 35 | 55 | -20 |
| Example 24 | 17, 16 | 3.3 | 3.3 | 3.3 | 0.0 | 45 | 55 | 35 | 20 |
| Example 25 | 7, 1 | 1.9 | 0.5 | 3.5 | -3.0 | 52 | 52 | 52 | 0 |
| Example 26 | 1, 7 | 2.0 | 3.5 | 0.5 | 3.0 | 52 | 52 | 52 | 0 |
| Comparative Example 1 | 19 | 0 | 0 | 0 | 0 | 58 | 58 | 58 | 0 |
| Comparative Example 2 | 20 | 11.7 | 12.0 | 11.7 | 0.3 | 29 | 30 | 32 | -2 |

Table 2-2

| | Liquid composition for forming porous insulating film No. | Physical properties of porous insulating layer | | | Evaluation result | |
|---|---|---|---|---|---|---|
| | | Average primary particle size | Average dispersed particle size | Average thickness | Compression-resistance property | Cycle capacity retention rate |
| | | nm | nm | μm | | |
| Example 1 | 1 | 180 | 250 | 20 | A | A |
| Example 2 | 2 | 150 | 400 | 20 | A | A |
| Example 3 | 3 | 320 | 450 | 20 | A | A |
| Example 4 | 4 | 390 | 600 | 20 | A | A |
| Example 5 | 5 | 180 | 180 | 20 | C | A |
| Example 6 | 6 | 180 | 180 | 20 | B | A |
| Example 7 | 7 | 180 | 210 | 20 | A | A |
| Example 8 | 8 | 180 | 350 | 20 | A | A |
| Example 9 | 9 | 180 | 590 | 20 | A | B |
| Example 10 | 10 | 180 | 700 | 20 | A | C |
| Example 11 | 11 | 400 | 670 | 20 | B | A |
| Example 12 | 12 | 600 | 780 | 20 | C | A |
| Example 13 | 13 | 700 | 700 | 20 | C | A |
| Example 14 | 14 | 180 | 900 | 20 | C | A |
| Example 15 | 1 | 180 | 250 | 3 | C | A |
| Example 16 | 1 | 180 | 250 | 10 | B | A |
| Example 17 | 1 | 180 | 250 | 30 | A | B |
| Example 18 | 1 | 180 | 250 | 40 | B | C |
| Example 19 | 15 | 180 | 250 | 20 | A | C |
| Example 20 | 16 | 180 | 250 | 20 | A | B |
| Example 21 | 17 | 180 | 250 | 20 | B | A |
| Example 22 | 18 | 180 | 250 | 20 | C | A |
| Example 23 | 16, 17 | 180 | 250 | 20 | B | B |
| Example 24 | 17, 16 | 180 | 250 | 20 | B | B |
| Example 25 | 7, 1 | 180 | 250 | 20 | B | A |
| Example 26 | 1,7 | 180 | 250 | 20 | B | A |
| Comparative Example 1 | 19 | - | - | 20 | D | A |
| Comparative Example 2 | 20 | 180 | 1300 | 20 | A | D |

From the results of Table 2-1 and Table 2-2, it was found that Examples 1 to 26 can achieve both excellent compression resistant strength of the porous insulating layer and a high capacity retention rate of the electrochemical element.

On the other hand, it was found that the porous insulating layer of Comparative Example 1, which did not contain inorganic oxide particles, was inferior in compression resistant strength. In addition, it was found that the electrode of Comparative Example 2 having a porous insulating layer in which the area ratio (content) of the inorganic oxide particles exceeded 10% was inferior in capacity retention rate due to closing of the voids in the porous insulating layer when the electrochemical element was repeatedly charged.

Aspects of the present invention are, for example, as follows.

<1> An electrode comprising:

an electrode base;
an electrode mixture layer on the electrode base, containing an active material; and
a porous insulating layer on the electrode mixture layer, formed integrally with the electrode mixture layer,
wherein the porous insulating layer has a porous structure having a resin backbone and contains an inorganic oxide, and
an area ratio (a:b) of the resin backbone (a) and the inorganic oxide (b) in the porous insulating layer ranges from 99.9%:0.1% to 90%: 10%.

<2> The electrode according to <1>, wherein at least a part of the inorganic oxide is present in the resin backbone.
<3> The electrode according to <1> or <2>, wherein the inorganic oxide comprises at least one element selected from aluminum, silicon, and zirconium.
<4> The electrode according to any one of <1> to <3>, wherein the inorganic oxide in the porous insulating layer has an average primary particle size of 500 nm or less.
<5> The electrode according to any one of <1> to <4>, wherein the inorganic oxide in the porous insulating layer has an average dispersed particle size of 900 nm or less.
<6> The electrode according to any one of <1> to <5>, wherein the porous insulating layer has an average thickness of 3 $\mu$m or more and 50 $\mu$m or less.
<7> The electrode according to any one of <1> to <6>, wherein the porous insulating layer has an average porosity of 30% or more.
<8> The electrode according to any one of <1> to ,7., wherein a difference between an average porosity in a range of 10% of a thickness of the porous insulating layer from the electrode mixture layer and an average porosity in a range of 10% of the thickness of the porous insulating layer from a side opposite to the electrode mixture layer is within ± 20%.
<9> The electrode according to any one of <1> to <8>, wherein a difference between an area ratio of the inorganic oxide in a range of 10% of a thickness of the porous insulating layer from the electrode mixture layer and an area ratio of the inorganic oxide in a range of 10% of the thickness of the porous insulating layer from a side opposite to the electrode mixture layer is within ± 3%.
<10> An electrochemical element comprising the electrode according to any one of <1> to <9>.
<11> A device comprising the electrochemical element according to <10>.
<12> A moving object comprising the electrochemical element according to <10>.
<13> An electrode production apparatus for producing the electrode according to any one of <1> to <9>, comprising:

an applying unit that applies a porous-insulating-layer liquid composition containing an inorganic oxide, a polymerizable compound, and a solvent onto an electrode mixture layer; and
a curing unit that cures the applied porous-insulating-layer liquid composition.

<14> The electrode production apparatus according to <13>, wherein the application unit discharges the porous-insulating-layer liquid composition by an inkjet method.
<15> An electrode production method for producing the electrode according to any one of <1> to <9>, comprising:

applying a porous-insulating-layer liquid composition containing an inorganic oxide, a polymerizable compound, and a solvent onto an electrode mixture layer; and
curing the applied porous-insulating-layer liquid composition.

<16> The electrode production method according to <15>, wherein the applying includes discharging the porous-insulating-layer liquid composition by an inkjet method.

According to the electrode according to any of <1> to <9>, the electrochemical element according to <10>, the device according to <11>, the moving object according to <12>, the electrode production apparatus according to any of <13> to <14>, and the electrode production method according to any of <15> to <16>, it is possible to solve the various conventional problems and achieve the object of the present disclosure.

**Claims**

1. An electrode (10, 20) comprising:

   an electrode base (11, 21);
   an electrode mixture layer (12, 22) on the electrode base (11, 21), containing an active material; and
   a porous insulating layer (13, 23) on the electrode mixture layer (12, 22), formed integrally with the electrode mixture layer (12, 22),
   wherein the porous insulating layer (13, 23) has a porous structure having a resin backbone and contains an inorganic oxide, and
   an area ratio (a:b) of the resin backbone (a) and the inorganic oxide (b) in the porous insulating layer ranges from 99.9%:0.1% to 90%: 10%.

2. The electrode (10, 20) according to claim 1, wherein at least a part of the inorganic oxide is present in the resin backbone.

3. The electrode (10, 20) according to claim 1 or 2, wherein the inorganic oxide comprises at least one element selected from aluminum, silicon, and zirconium.

4. The electrode (10, 20) according to any one of claims 1 to 3, wherein the inorganic oxide in the porous insulating layer (13, 23) has an average primary particle size of 500 nm or less.

5. The electrode (10, 20) according to any one of claims 1 to 4, wherein the inorganic oxide in the porous insulating layer (13, 23) has an average dispersed particle size of 900 nm or less.

6. The electrode (10, 20) according to any one of claims 1 to 5, wherein the porous insulating layer (13, 23) has an average thickness of 3 $\mu$m or more and 50 $\mu$m or less.

7. The electrode (10, 20) according to any one of claims 1 to 6, wherein the porous insulating layer (13, 23) has an average porosity of 30% or more.

8. The electrode (10, 20) according to any one of claims 1 to 7, wherein a difference between an average porosity in a range of 10% of a thickness of the porous insulating layer (13, 23) from the electrode mixture layer (12, 22) and an average porosity in a range of 10% of the thickness of the porous insulating layer (13, 23) from a side opposite to the electrode mixture layer (12, 22) is within $\pm$ 20%.

9. The electrode (10, 20) according to any one of claims 1 to 8, wherein a difference between an area ratio of the inorganic oxide in a range of 10% of a thickness of the porous insulating layer (13, 23) from the electrode mixture layer (12, 22) and an area ratio of the inorganic oxide in a range of 10% of the thickness of the porous insulating layer (13, 23) from a side opposite to the electrode mixture layer (12, 22) is within $\pm$ 3%.

10. An electrochemical element (50) comprising the electrode (10, 20) according to any one of claims 1 to 9.

11. A device comprising the electrochemical element according to claim 10.

12. A moving object (550) comprising the electrochemical element (552) according to claim 10.

13. An electrode production apparatus (300) for producing the electrode (10, 20) according to any one of claims 1 to 9, the apparatus (300) comprising:

    an applying unit (306) that applies a porous-insulating-layer liquid composition containing an inorganic oxide, a polymerizable compound, and a solvent onto an electrode mixture layer; and
    a curing unit (309) that cures the applied porous-insulating-layer liquid composition.

14. An electrode production method for producing the electrode (10, 20) according to any one of claims 1 to 9, the method comprising:

applying a porous-insulating-layer liquid composition containing an inorganic oxide, a polymerizable compound, and a solvent onto an electrode mixture layer; and
curing the applied porous-insulating-layer liquid composition.

15. The electrode production method according to claim 14, wherein the applying includes discharging the porous-insulating-layer liquid composition by an inkjet method.

FIG. 1A

# FIG. 1B

13x

13

INORGANIC
OXIDE PARTICLE

EP 4 428 942 A2

# FIG. 2

MEASUREMENT WIDTH IN PLANAR
MEASUREMENT   DIRECTION IS EQUAL TO OR GREATER THAN
REGION 2   THICKNESS OF POROUS INSULATING LAYER

FARTHEST PORTION (100)
(90)

MIDDLE (50)

(10)
BOUNDARY PORTION (0)

POROUS
INSULATING LAYER

MEASUREMENT
REGION 1

ELECTRODE MIXTURE LAYER

ELECTRODE BASE

EP 4 428 942 A2

# FIG. 3

# FIG. 4

# FIG. 5

# FIG. 6

EP 4 428 942 A2

FIG. 7

# FIG. 8

# FIG. 9

EP 4 428 942 A2

FIG. 10

FIG. 11

# FIG. 12

# FIG. 13

# FIG. 14

**REFERENCES CITED IN THE DESCRIPTION**

**Patent documents cited in the description**

- WO 2018186135 A

- WO 2014106954 A